# EUROPÄISCHE PATENTSCHRIFT

(11) **EP 2 189 198 B1**
(45) Veröffentlichungstag und Bekanntmachung des Hinweises auf die Patenterteilung: **21.06.2017**
(21) Anmeldenummer: 09006802.4
(22) Anmeldetag: 20.05.2009
(51) Int. Cl.: A63F 13/213, A63F 13/211, A63F 13/218, A63F 13/245, A63F 13/52

(54) **Körperpflegegerät des persönlichen Bedarfs**
Personal body care device
Appareil de soin du corps à usage personnel

(30) Priorität: 20.11.2008 US 116327 P
(43) Veröffentlichungstag der Anmeldung: 26.05.2010
(73) Patentinhaber: Braun GmbH, 61476 Kronberg/Taunus (DE)
(72) Erfinder: Schmid, Michael, 60599 Frankfurt/Main (DE); McGarry, Rory, 60385 Frankfurt/Main (DE); Stegmann, Wolfgang, 60389 Frankfurt/Main (DE); Vu, Duy Phong, 65824 Schwalbach (DE); Heil, Benedikt, 61239 Ober-Mörlen (DE); Stratmann, Martin, 60318 Frankfurt/Main (DE); Schaefer, Norbert, 60320 Frankfurt/Main (DE); Kunath, Ivo, 61476 Kronberg/Taunus (DE); Vetter, Ingo, 61184 Karben (DE); Fischer, Vladimir, 65843 Sulzbach (DE)
(74) Vertreter: Schneider, Stefan Michael

(56) Entgegenhaltungen:
- WO-A1-2007/112112
- US-A1- 2002 115 482
- US-A1- 2003 017 874
- US-A1- 2006 040 246
- US-A1- 2007 136 964
- US-B2- 7 001 270

## Beschreibung

Die vorliegende Erfindung betrifft ein Körperpflegegerät des persönlichen Bedarfs, insbesondere in Form einer Zahnbürste, mit einem handführbaren Pflegewerkzeug, insbesondere Zahnbürste, sowie einer Anzeigevorrichtung zur Anzeige von interaktiven Darstellungen, die mittels einer Steuervorrichtung vom dem Pflegewerkzeug her interaktiv steuerbar sind, wobei eine Erfassungseinrichtung zur Erfassung zumindest eines die Körperpflege und/oder das Pflegewerkzeug betreffenden Betriebsparameters vorgesehen ist, in Abhängigkeit dessen die Darstellungen von der Steuervorrichtung steuerbar sind.

Um den Anreiz zum regelmäßigen Zähneputzen zu erhöhen, werden mittlerweile an Zahnputzvorrichtungen Bildschirme bzw. Displays vorgesehen, auf denen Videospiele dargestellt werden, die von der Zahnbürste her interaktiv gesteuert werden können. Durch den zusätzlich gegebenen Unterhaltungswert werden insbesondere Kinder dazu motiviert, regelmäßig ihre Zähne zu putzen. Alternativ oder zusätzlich zu reinen Unterhaltungsspielen können dabei auch Anleitungen zum effizienten und wirksamen Reinigen der Zähne dargestellt werden, beispielsweise dergestalt, dass der Zahnbürstenbenutzer die dargestellten Bildsequenzen nacharbeitet.

Beispielsweise beschreibt die WO 2007/112112 A1 eine Zahnputzvorrichtung, bei der an der Basisstation zum Laden der Zahnbürste ein Bildschirm vorgesehen ist, auf dem während des Zähneputzens Videospiele gezeigt werden. Das Videospiel ist hierbei von der Zahnbürste her steuerbar. Einerseits besitzt die Zahnbürste manuell betätigbare Eingabetasten zur Eingabe von Steuerbefehlen für das Videospiel. Andererseits werden an der Zahnbürste mittels diverser Sensoren Putzparameter wie Anpressdruck und bei den Putzbewegungen auftretende Beschleunigungen erfasst, wobei anhand dieser erfassten Parameter das Videospiel auf dem Bildschirm gesteuert wird. Um für einen jeweiligen Benutzer ein jeweils geeignetes Videospiel zu zeigen, wird das Aufsatzteil der Zahnbürste anhand eines Identifikationscodes identifiziert, in Abhängigkeit dessen das Videospiel oder dessen Spielregeln ausgewählt werden. Auch wenn hierdurch eine gewisse Anpassung an den individuellen Nutzer gewährleistet ist, ist der Grad der Personalisierung sowie die Anpassbarkeit an die jeweiligen Bedürfnisse begrenzt.

Aus der US 2008/0102953 A1 ist ebenfalls eine Zahnbürste bekannt, die als Eingabevorrichtung zur Steuerung einer Spielekonsole ausgebildet ist, um darauf ein Videospiel zu steuern. Ein an der Bürste angebrachter Sensor detektiert Bürstenbewegungen, wobei anhand der Bewegungssignale der Zahnbürste die Bewegung eines virtuellen Spieleobjekts des Videospiels gesteuert wird. Weitere Betriebsparameter sollen durch weitere Sensoren an der Bürste erfasst werden, so z.B. durch einen Feuchtigkeitssensor, einen Chemikaliendetektor, einen pH-Wert-Sensor, einen Temperatursensor oder auch einen Zahnpastadetektor, um beispielsweise bei Verwendung der richtigen Zahnpasta zusätzliche Spielboni oder Funktionalitäten freizuschalten.

Die US 2006/0040246 A1 beschreibt eine elektrische Zahnbürste, die an einer Basisstation abstellbar und ladbar ist. Die Basisstation enthält ein Display, auf dem ein interaktives Spiel wie beispielsweise PAC-MAN^{®} dargestellt wird. Die Zahnbürste kommuniziert drahtlos mit der Steuervorrichtung zur Steuerung des Spiels, das durch Abnehmen der Zahnbürste von der Basisstation oder einen an der Zahnbürste angebrachten Startknopf aktiviert wird. Sensoren an der Zahnbürste erfassen deren Bewegungen, die zur Steuerung von Bewegungen von Spielcharakteren bzw. Spieleteilen auf dem Bildschirm verwendet werden. Um verschiedene Spiele ausführen zu können, können verschiedene Speicherbausteine eingesetzt werden. Je geschickter das auf dem Bildschirm dargestellte Spiel gespielt wird, desto mehr Gewinnpunkte werden dem Nutzer zugeschrieben.

Aus der DE 10153863 A1 ist eine Zahnbürste bekannt, an deren Schaftende ein kugelförmiges Displayteil aufsteckbar ist, auf dem die mittels Sensoren erfassten Putzergebnisse angezeigt werden oder nach erfolgreichem Putzvorgang ein Spiel für Kinder dargestellt werden kann. Eine interaktive Steuerung des auf dem Display dargestellten Spiels von der Zahnbürste her ist allerdings nicht vorgesehen, vielmehr erfolgt eine Steuerung des auf dem Display dargestellten Programms durch am Displayteil selbst angeordnete Eingabetasten, so dass der Unterhaltungswert und der Lerneffekt begrenzt sind. Das eigentliche Display im Displayteil ist hierbei in die kugelförmige Gestalt des Displayteils eingefügt und mit einer kalottenförmigen, durchsichtigen Abdeckung aus kratz- und säurefestem Kunststoff abgedeckt.

Weitere Zahnputzvorrichtungen mit einem Display, auf dem interaktiv steuerbare Spiele dargestellt werden, zeigen die Schriften US 2008/0141478 und US 2008/0141476, wobei mehrere Zahnbürsten miteinander kommunizieren können, um Spiele wie beispielsweise "Stein, Schere, Blatt" im Wettbewerb gegeneinander spielen zu können. Die Displays sind hierbei jedoch am Handstück der Zahnbürste selbst angebracht, so dass ein das richtige Zähneputzen unterstützendes Spiel während des Putzens nicht gespielt werden kann.
Die Schrift US7001270B2 zeigt ein Computerspiel mit virtuellen Zahndarstellungen. Auch wenn solche Unterhaltungsspiele den Anreiz steigern, das Körperpflegegerät wie beispielsweise eine Zahnbürste auch tatsächlich zu benutzen, besteht doch die Gefahr, dass die Spiele in den Vordergrund treten und gerade bei Kindern deren Aufmerksamkeit so weit ablenken, dass das eigentliche Ziel, die Körperpflege und -reinigung in ihrer Effizienz zu verbessern, leidet. Es wäre daher wünschenswert, den spielerischen Anreiz zur Benutzung des Geräts mit einer den effizienten Einsatz des Geräts unterstützenden Bedienbarkeit zu vereinen, wobei es von Vorteil wäre, eine spielerische Lernhilfe für die korrekte Bedienbarkeit zu geben und bei einer unsachgemäßen Bedienung korrigierend einzugreifen.

Der vorliegenden Erfindung liegt die Aufgabe zugrunde, ein verbessertes Körperpflegegerät der eingangs genannten Art zu schaffen, das Nachteile des Standes der Technik vermeidet und Letzteren in vorteilhafter Weise weiterbildet. Insbesondere soll eine erleichterte Bedienbarkeit auch für Kinder, die Fehlbedienungen vermeidet und eine effizientere Nutzung des Körperpflegegeräts unterstützt, erreicht werden.

Diese Aufgabe wird erfindungsgemäß durch ein Körperpflegegerät gemäß Anspruch 1 gelöst. Bevorzugte Ausgestaltungen der Erfindung sind Gegenstand der abhängigen Ansprüche.

Es wird vorgeschlagen, bei der Körperpflege die Position des Pflegewerkzeugs relativ zu einem zu pflegenden Körperteil zu bestimmen und die auf der Anzeigevorrichtung angezeigte Darstellung in Abhängigkeit der bestimmten Relativposition zu verändern, um dem Gerätebenutzer ein Feedback darüber zu geben, ob das Pflegewerkzeug korrekt, vollständig, an der richtigen Stelle und/oder ausreichend lange über das zu pflegende Körperteil geführt ist. Erfindungsgemäß besitzt die eingangs genannte Erfassungseinrichtung Positionserfassungsmittel zur Erfassung der Relativposition des Pflegewerkzeugs relativ zu einem zu pflegenden Körperteil des Gerätenutzers, wobei die auf der Anzeigevorrichtung angezeigte Darstellung in Abhängigkeit der erfassten Relativposition gesteuert wird. Die Bildschirmdarstellung kann hierbei vorteilhafterweise eine virtuelle, animierte Darstellung sein, die den Körperpflegevorgang simuliert, wobei die Animation in Abhängigkeit der erfassten Relativposition des tatsächlichen Pflegewerkzeugs relativ zu dem tatsächlichen Körperteil des Gerätebenutzers gesteuert wird.

Besonders hilfreich für den Gerätebenutzer, gerade wenn dies Kinder mit noch weniger ausgeprägten motorischen Fähigkeiten sind, ist eine Anzeige des jeweils zu bearbeitenden Körperteils und/oder dessen Pflegezustand. Nach einem weiteren vorteilhaften Aspekt der vorliegenden Erfindung besitzt die Erfassungseinrichtung Objekterkennungsmittel zur Erkennung eines Körperteils, wobei die Steuervorrichtung die Darstellung auf der Anzeigevorrichtung anhand der erfassten Objektkennungsdaten und zumindest einem Betriebsparameter betreffend die Körperpflege und/oder das Pflegewerkzeug steuert. Ist das Körperpflegegerät beispielsweise eine Zahnbürste, kann es von Vorteil sein, die Zähne des Gerätebenutzers als zu pflegende Körperteile als solche zu erfassen und zu identifizieren und beispielsweise zugehörige Parameter wie Verschmutzungszustand oder bereits erfolgte Pflege anzuzeigen. Beispielsweise kann bei Erkennung eines Zahnes mit größeren Verunreinigungen die Darstellung auf der Anzeigevorrichtung, die beispielsweise ein virtuelles Bild eines Gebisses wiedergeben kann, eine besondere Kennung des besonders verunreinigten Zahnes beinhalten, beispielsweise in Form einer Markierung oder einer Hervorhebung wie beispielsweise eine Einfärbung, um dem Gerätebenutzer anzuzeigen, dass er an diesem Zahn besonders intensiv zu reinigen hat. Insofern kann die Objektkennung auch ohne Anzeige der Relativposition des Pflegewerkzeugs zum zu reinigenden Körperteil Vorteile mit sich bringen.

Insbesondere wird die Objektkennung jedoch dazu verwendet, die Relativposition des Pflegewerkzeugs zu dem jeweils identifizierten Körperteil in der Darstellung auf der Anzeigevorrichtung plastisch darzustellen. Wird beispielsweise ein rechter, oberer Schneidezahn geputzt, erkennen die Objekterkennungsmittel den gerade bearbeiteten Zahn als rechten oberen Schneidezahn, so dass in einer virtuellen Darstellung auf der Anzeigevorrichtung ein entsprechender Bildteil hervorgehoben und/oder gekennzeichnet werden kann.

Die zuvor genannten Positionserfassungsmittel können grundsätzlich verschiedene Parameter der Relativposition des Pflegewerkzeugs relativ zum zu pflegenden Körperteil beinhalten. Nach einer einfachen Ausgestaltung der Erfindung können die erfassten Relativpositionsdaten lediglich den Abstand des Pflegewerkzeugs vom zu pflegenden Körperteil beinhalten. Alternativ oder zusätzlich können die Positionserfassungsmittel die Relativposition des Pflegewerkzeugs zum jeweiligen Körperteil jedoch komplexer, insbesondere auch dynamisch erfassen. In Weiterbildung der Erfindung kann auch ein Neigungssensor zur Erfassung der Neigung des Pflegewerkzeugs relativ zum zu pflegenden Körperteil und/oder absolut im Raum, ein Bewegungssensor zur Erfassung der Bewegungsstrecke und/oder Bewegungsrichtung des Pflegewerkzeugs relativ zum jeweiligen Körperteil und/oder absolut im Raum, ein Geschwindigkeitssensor zur Erfassung der Geschwindigkeit des Pflegewerkzeugs relativ zum jeweiligen Körperteil und/oder absolut im Raum und/oder ein Beschleunigungssensor zur Erfassung der Beschleunigung des Pflegewerkzeugs relativ zu dem Körperteil und/oder absolut im Raum vorgesehen sein. Je nach Ausbildung der Erfassungsmittel kann die auf der Anzeigevorrichtung angezeigte Darstellung den Körperpflegevorgang mehr oder weniger detailgetreu simulieren.

Die Objekterkennung zur Erkennung und/oder Identifizierung eines jeweiligen Körperteils kann grundsätzlich in verschiedener Art und Weise erfolgen. Nach einer vorteilhaften Ausgestaltung der Erfindung können die Objekterkennungsmittel eine optische Erfassungseinheit zur optischen Erfassung zumindest eines anatomischen Merkmals des jeweiligen Körperteils aufweisen, anhand dessen der jeweilige Körperteil identifizierbar ist. Eine solche Anatomieerkennung gestattet es präzise und effizient, die exakte Position des Pflegewerkzeugs relativ zum Körper des Gerätebenutzers zu identifizieren und die virtuelle Darstellung entsprechend zu steuern.

Um eine einfache, praxisgerechte Anwendung zu ermöglichen, arbeitet die optische Erfassungseinheit vorteilhafterweise markierungslos, d.h. sie erkennt den jeweiligen Körperteil, ohne darauf zuvor entsprechende Markierungen anzubringen. Insbesondere kann hierzu mindestens ein Anatomiemerkmal erfasst und ausgewertet werden.

Die Objekterkennungsmittel können in vorteilhafter Weiterbildung der Erfindung Farben und Farbkontraste, Oberflächenstrukturen und Strukturunterschiede, Materialkontraste, Oberflächenkonturen und/oder räumlichen Geometrien eines Körperteils bestimmen. Um hieraus das jeweilige Körperteil zu identifizieren, können grundsätzlich verschiedene Vorgehensweisen angewendet werden, beispielsweise kann nach Bestimmung der dreidimensionalen Kontur eines Zahnes durch einen Abgleich mit einem Referenzdatensatz und/oder einem Abgleich mit mehreren Referenzdatensätzen der jeweilige Zahn identifiziert werden.

Um eine einfache Bestimmung der Relativposition des Pflegewerkzeugs zum jeweiligen Körperteil aus der Identifikation dieses Körperteils und/oder in Verbindung mit dessen Objektkennungsdaten zu ermöglichen, ist es nach einer vorteilhaften Weiterbildung der Erfindung von Vorteil, wenn die Objekterkennungsmittel zumindest eine an dem Pflegewerkzeug angeordnete Erfassungseinheit aufweisen. Insbesondere kann in vorteilhafter Weiterbildung der Erfindung eine Kamera und/oder ein optischer Sensor an dem Pflegewerkzeug zur Objekterkennung angeordnet sein, so dass die Kamera bzw. der optische Sensor beim Führen des Pflegewerkzeugs über den Körper hinweg ebenfalls über diesen hinweggeführt wird. Grundsätzlich wäre es zwar auch möglich, eine separate Erfassungseinheit beispielsweise in Form einer separat platzierten Kamera vorzusehen, die einerseits das Pflegewerkzeug und andererseits den zu pflegenden Körperteil erfasst. Dies erfordert jedoch eine bestimmte Positionierung des Körpers zu der Erfassungseinheit und somit einen vom Gerätebenutzer zusätzlich einzuhaltenden Randbedingungsparameter. Um eine einfachere Bedienbarkeit zu erreichen, ist die zuvor genannte Ausführung mit einer an dem Pflegewerkzeug angeordneten Kamera besonders vorteilhaft.

In Weiterbildung der Erfindung können auch die zuvor genannten weiteren Erfassungsmittel bzw. Sensoren der Positionserfassungsmittel an dem Pflegewerkzeug angeordnet sein.

In Weiterbildung der Erfindung ist die Erfassungseinrichtung derart ausgebildet, dass zumindest ein relevanter Körperpflegeparameter individuell für den jeweils identifizierten Körperteil erfasst wird. Insbesondere kann beispielsweise die Putzbewegung, die Putzzeit, die Andruckkraft und/oder die bearbeitete Fläche individuell für einen aktuell bearbeiteten Körperteil erfasst und/oder bestimmt werden. Die entsprechende Verknüpfung von Objektkennungsdaten und erfasstem Betriebsparameter kann in vorteilhafter Weiterbildung der Erfindung in einfacher Weise dadurch erfolgen, dass die Erfassungsmittel für den genannten Körperpflegeparameter wie beispielsweise ein Andruckkraftsensor ebenso wie die Objekterkennungsmittel an dem Pflegewerkzeug angeordnet sind, so dass die Objekterkennung im Wesentlichen zeitparallel zu der Körperpflegeparametererfassung erfolgt.

Um eine intuitive Erfassbarkeit der richtigen Gerätebedienung zu ermöglichen und auch Kindern eine spielerische Lernhilfe an die Hand zu geben, besitzt in vorteilhafter Weiterbildung der Erfindung die Steuervorrichtung eine Simulationseinrichtung, die den Körperpflegevorgang mittels einer virtuellen, animierten Darstellung auf der Anzeigevorrichtung simuliert, deren Animation von einer Animationssteuereinheit in Abhängigkeit der erfassten Relativposition des Pflegewerkzeugs zum zu pflegenden Körperteil und/oder den erfassten Objektkennungsdaten eines jeweiligen Körperteils gesteuert wird. Besonders hilfreich ist hierbei eine synchrone Steuerung der animierten Darstellung mit den erfassten Bewegungen und Betriebsparametern des Pflegewerkzeugs. Hierdurch sieht der jeweilige Gerätebenutzer zeitgleich oder nur mit geringem Zeitversatz die seinen Pflegebewegungen und/oder Steuerbefehlen entsprechenden Reaktionen der Animation auf der Anzeigevorrichtung, so dass ein unmittelbarer Lerneffekt eintritt.

Um einem Gerätebenutzer eine Hilfe zu geben, welche zu pflegende Körperteile er bereits bearbeitet hat und welche noch nicht, besitzt die Simulationseinrichtung in Weiterbildung der Erfindung Anzeigemittel zur Anzeige eines bereits bearbeiteten Körperteils und/oder eines noch nicht bearbeiteten Körperteils und/oder eines noch zu bearbeitenden Körperteils. Die Anzeige kann hierbei grundsätzlich in verschiedener Art und Weise ausgebildet sein. Beispielsweise können an der virtuellen Darstellung der zu pflegenden Körperteile entsprechende Markierungen angebracht werden, beispielsweise durch eine Verfärbung der entsprechenden Darstellungsteile. Wird beispielsweise ein Zahn ausreichend lange geputzt, kann dessen virtuelle Darstellung von einem Beigeton auf einen Weißton geschaltet werden.

Alternativ oder zusätzlich können hierzu auch andere Anzeigemittel Verwendung finden, beispielsweise ein Texteinblendung, eine Veränderung der Gestik bzw. Mimik des animierten Charakters bzw. des Avatars der virtuellen Darstellung, ein akustisches Signal wie Piepen oder Sprache oder ein optisches Signal wie beispielsweise Leuchtdioden oder eine Symboldarstellung wie beispielsweise ein Stoppschild, ein durchgestrichener Pfeil oder dergleichen.

Um dem Gerätebenutzer eine Lernhilfe zur richtigen Benutzung des Geräts zu geben, kann in Weiterbildung der Erfindung die Simulationseinrichtung Anzeigemittel zur Anzeige des Sollwerts und/oder des Istwerts eines Körperpflegeparameters wie beispielsweise der Bewegungsbahn des Pflegewerkzeugs über den zu pflegenden Körperteil aufweisen. Dabei können auch die Soll- und/oder Istwerte anderer Betriebsparameter bzw. Körperpflegeparameter angezeigt, insbesondere in die virtuelle, animierte Darstellung integriert werden, so insbesondere eine Anzeige der Bewegungsgeschwindigkeit, der Andruckkraft, der Pflegezeit, der Bewegungsamplitude und/oder des Anstellwinkels des Pflegewerkzeugs, wobei vorteilhafterweise jeweils Sollwert und Istwert eingeblendet werden.

In Weiterbildung der Erfindung kann die Steuervorrichtung hierbei eine Auswerteeinheit umfassen, die einen Abgleich zwischen den Sollwerten und den erfassten Istwerten der Betriebsparameter bzw. der Körperpflegeparameter vornimmt, um Fehler in der Bedienung des Geräts zu bestimmen. Die Simulationseinrichtung kann in Weiterbildung der Erfindung Anzeigemittel zum Anzeigen einer Fehleranzeige in der virtuellen Darstellung bei Erkennung einer Fehlbedienung, insbesondere bei einer übermäßigen Soll-/Istwertdifferenz eines oder mehrerer Körperpflegeparameter und/oder Betriebsparameter aufweisen.

Die vorgenannte Darstellung von Soll- und Istwert kann grundsätzlich permanent in die animierte Darstellung auf der Anzeigevorrichtung eingeblendet sein. Alternativ kann die Simulationseinrichtung auch Steuermittel umfassen, die die Soll- und/oder Istwerte und/oder die Fehleranzeige nur dann aktiviert, wenn eine Fehlbedienung auch tatsächlich erfasst wird und/oder ein vorbestimmtes Maß überschreitet.

In vorteilhafter Weiterbildung der Erfindung können insbesondere grafische Anzeigen zur Unterstützung der korrekten Gerätebedienung in die animierte Darstellung eingebaut sein. Besonders von Vorteil ist es beispielsweise für ein Körperpflegegerät in Form einer Zahnbürste, in die animierte Darstellung Linien für eine Sollbewegungsbahn und eine Istbewegungsbahn anzuzeigen, so dass der Gerätebenutzer versuchen kann, die beiden Linien zur Deckung zu bringen, was dann einem optimalen Handführen des Pflegewerkzeugs entspricht. Ist andererseits ein Drucksensor montiert, kann der Benutzer auch über den empfohlenen Andruck und im Vergleich hierzu über den aktuellen Andruck informiert werden, beispielsweise dadurch, dass die Abweichung grafisch und farbig illustriert wird. Beispielsweise kann bei zu hohem Anpressdruck ein gerade bearbeiteter Zahn bzw. dessen virtuelle Darstellung rot eingefärbt werden. Alternativ oder zusätzlich kann auch ein Balkendiagramm mit einem in der Länge veränderlichen roten Balken zu hohen Anpressdruck anzeigen und/oder mit einem grünen Balken korrekten Anpressdruck anzeigen.

In Verbindung mit der zuvor genannten Positionsbestimmungseinrichtung und/oder den Objekterkennungsmitteln kann in vorteilhafter Weiterbildung der Erfindung vorgesehen sein, dass die Pflegezeit an einem jeweiligen Körperteil, insbesondere die Putzzeit an einem jeweiligen Zahn, erfasst und in der virtuellen Darstellung eine Anzeige zum Weitergehen auf einen nächsten Zahn dann aktiviert wird, wenn die Sollpflegezeit erreicht ist. Dies kann beispielsweise durch grafisches Hervorheben des Nachbarzahnes erfolgen, wenn die Zahnbürste weiterbewegt werden soll. Alternativ oder zusätzlich kann eine Fehleranzeige dann generiert werden, wenn vor Ablauf der Sollputzzeit die Zahnbürste zu einem nächsten Zahn weiterbewegt wird.

In Weiterbildung der Erfindung wird vorgeschlagen, den Bildschirm der Anzeigevorrichtung nicht nur für die Darstellung bzw. den Ablauf eines Videospiels und/oder die Anzeige von animierten, virtuellen Darstellungen einer Körperpflegesimulation zu nutzen, sondern darauf auch verschiedene andere Informationen anzuzeigen und dem jeweiligen Gerätebenutzer die Möglichkeit zu geben, zwischen dem Video- und/oder Simulationsspiel und der Anzeige der gewünschten Informationen hin und her zu schalten. Derartige Informationen können verschiedener Natur sein, beispielsweise den Ladezustand des Geräts zum Gegenstand haben, die schon erfolgte Putzzeit betreffen oder das verwendete Aufsatzteil anzeigen. Je nach Belieben des jeweiligen Gerätebenutzers kann dieser zwischen verschiedenen Anzeigemodi hin und her schalten und so die Bildschirmdarstellung an seine Bedürfnisse anpassen. Erfindungsgemäß umfasst die Steuervorrichtung einen Spiele- und/oder Simulationscontroller zur Steuerung eines Videospiels auf der Anzeigevorrichtung sowie einen Informationscontroller zur Bereitstellung von Informationen auf der Anzeigevorrichtung, wobei eine Umschaltvorrichtung, die durch eine Umschalttaste betätigbar ist, zum Umschalten von der vom Spiele- und/oder Simulationscontroller generierten Spielanzeige zu der von dem Informationscontroller generierten Informationsanzeige auf der Anzeigevorrichtung und/oder umgekehrt vorgesehen ist. Die genannten Spiele-, Simulations- und Informationscontroller brauchen hierbei keine separaten Hardwarebausteine sein, sondern können in Form verschiedener Softwaremodule in einem gemeinsamen Microcontroller verwirklicht sein.

Die zusätzlich zu dem Videospiel und/oder der animierten Simulation darstellbaren Informationen können hierbei grundsätzlich verschiedener Natur sein und beispielsweise feste, vorab gespeicherte Informationen betreffend das verwendete Arbeitsgerät oder den aktuellen Wert eines Betriebsparameters wiedergeben. In Weiterbildung der Erfindung können auf der Anzeigevorrichtung auch Auswertungen dargestellt werden, die aus zuvor erfassten Betriebsparametern des Körperpflegegeräts und/oder erfassten Umgebungsparametern generiert werden. In Weiterbildung der Erfindung umfasst die Steuervorrichtung eine Auswerteeinheit zur Auswertung von erfassten Betriebsparametern und/oder erfassten Umgebungsparametern, wobei die Umschaltvorrichtung mit der Auswerteeinheit koppelbar ist derart, dass dem jeweiligen Gerätebediener durch Betätigen der Umschalttaste ein Umschalten von dem Videospiel auf die Auswertedarstellungen ermöglicht wird.

Die Umschalttaste kann hierbei grundsätzlich an verschiedener Stelle angeordnet sein. Um eine einfache Bedienung auch während des Putzens zu ermöglichen und ein Umschalten auch während des Putzens in einfacher Weise zu ermöglichen, ist eine Umschalttaste an dem Pflegewerkzeug vorgesehen, so dass der Gerätebenutzer während des händischen Führens des Pflegewerkzeugs die Bildschirmdarstellung in der gewünschten Weise umschalten kann. Vorteilhafterweise ist die Umschalttaste hierbei an einem Griffabschnitt des Pflegewerkzeugs vorgesehen, insbesondere in einem Bereich, in dem eine Fingerkuppe des Gerätebedieners zu liegen kommt.

Alternativ oder zusätzlich kann eine Umschalttaste auch an der Anzeigevorrichtung selbst vorgesehen sein, so dass direkt an der Anzeigevorrichtung die gewünschte Bildschirmdarstellung aufgerufen werden kann. Dies ist insbesondere von Vorteil in Verbindung mit der zuvor genannten Auswerteeinheit, so dass Betriebsparameterauswertungen nach Beendigung des Putzvorgangs an der Anzeigevorrichtung abrufbar sind. Dies ermöglicht es beispielsweise in einfacher Weise Eltern das Putzverhalten ihrer Kinder zu überwachen, indem die in einem mit der Steuervorrichtung verbundenem Speicher abgelegten Auswertedaten durch Betätigen der Umschalttaste aufgerufen werden.

Alternativ oder zusätzlich kann eine Umschalttaste auch an einer Basisstation vorgesehen sein, an der das Pflegewerkzeug und/oder die Anzeigevorrichtung ablegbar und/oder andockbar und/oder ladbar ist.

Das Umschalten der Bildschirminhalte kann hierbei grundsätzlich in verschiedener Art und Weise erfolgen. Beispielsweise kann eine Überblendung der Bildschirmdarstellungen erfolgen. Alternativ oder zusätzlich kann eine gleichzeitige, verkleinerte Darstellung beider Bildschirmdarstellungen nach Art eines Split Screens erfolgen. In bevorzugter Weiterbildung der Erfindung werden jedoch die jeweils gewünschten Bildschirminhalte vollständig durch einander ersetzt.

In vorteilhafter Weiterbildung der Erfindung kann das Hin- und Herschalten der Bildschirmdarstellungen auch automatisch erfolgen. Eine hierzu vorgesehene Umschaltsteuerung betätigt die Umschalteinrichtung vorteilhafterweise automatisch in Abhängigkeit von einer vorbestimmten Betriebsbedingung des Körperpflegegeräts. Dies kann in einfacher Weiterbildung der Erfindung eine Zeitsteuerung beinhalten, beispielsweise dahingehend, dass nach Ablauf einer vorbestimmten Zeitspanne beispielsweise beginnend mit dem Start eines Spiels die Bildschirmdarstellung automatisch auf dem Informationsschirm umgeschalten wird. Alternativ oder zusätzlich kann die Umschaltung auf den Informationsbildschirm in Abhängigkeit eines vorbestimmten Spielereignisses des von dem Spielecontroller gesteuerten Videospiels erfolgen, beispielsweise dahingehend, dass erst nach erfolgreicher Beendigung des Spiels eine Datenauswertung betreffend dem Putzvorgang dargestellt wird.

Alternativ oder zusätzlich kann die Umschaltvorrichtung eine Informationsdarstellung auch dann einblenden, wenn von einer Auswerteeinheit der Steuervorrichtung eine falsche oder nicht perfekte Anwendung des Pflegegeräts erkannt und ausgewertet wird. Beispielsweise kann eine Anleitungs-Darstellung anstelle Videospiels eingeblendet werden, wenn mit zu hohem Anputzdruck in falschen Putzbewegungen ein Zahnputzvorgang ausgeführt wird.

Die manuelle Betätigung der Umschalteinrichtung kann grundsätzlich verschieden erfolgen. In Weiterbildung der Erfindung kann die hierfür vorgesehene Eingabevorrichtung eine Betätigungstaste zum Betätigen der Umschalteinrichtung durch Tastendruck, -berührung und/oder -annäherung aufweisen. Insbesondere kann hierbei eine mechanische Drucktaste und/oder eine graphische Touchscreen-Taste Verwendung finden.

Alternativ oder zusätzlich zu einer taktil arbeitenden Betätigungstaste kann die Eingabevorrichtung auch berührungslos arbeitend ausgebildet sein, vorzugsweise einen Bewegungssensor zur Erfassung einer Körpergliedbewegung aufweisen.

Um eine bessere Anpassung der auf der Anzeigevorrichtung angezeigten Darstellungen an den jeweiligen Gerätebediener zu ermöglichen, insbesondere das darauf ablaufende Spiel an den jeweiligen Benutzer anpassen zu können, kann nach einer vorteilhaften Weiterbildung der Erfindung eine Auswahlvorrichtung zur Auswahl mehrerer Spiele zur Anzeige auf der Anzeigevorrichtung vorgesehen sein, so dass das jeweils für den Gerätebenutzer passende Spiel dargestellt werden kann. Hierzu können in einer Speichereinrichtung mehrere Spiele und zugehörige Darstellungsdaten gespeichert sein, die von dem Spielecontroller nach Auswahl durch die Auswahlvorrichtung entsprechend auf die Anzeigevorrichtung gebracht und gesteuert werden. Beispielsweise kann für ein Kleinkind ein einfacheres Spiel ausgewählt werden als für ein schon älteres Kind.

Alternativ oder zusätzlich kann das Körperpflegegerät hierbei einen Wechselspeicher und/oder eine Schnittstelle zum Einlegen verschiedener Speichermedien mit unterschiedlichen Spielen enthalten, so dass die Auswahl durch verschiedene Speichermedien erfolgen kann. Der Speicher und/oder die Speicherschnittstelle kann hierbei grundsätzlich an verschiedener Stelle vorgesehen sein, beispielsweise unmittelbar an der Anzeigevorrichtung positioniert sein. Alternativ oder zusätzlich kann eine Schnittstelle zum Einspielen neuer Spielesoftware und/oder Herunterladen der Software vorgegeben sein.

In alternativer Weiterbildung der Erfindung kann eine einfache Individualisierung des auf der Anzeigevorrichtung dargestellten Spiels bzw. der animierten Simulation auch dadurch erfolgen, dass das jeweilige Speichermedium einem Aufsatzteil zugeordnet ist, das auf ein Handteil des Pflegewerkzeugs aufsetzbar und/oder an dieses andockbar ist. Beispielsweise kann auf dem Aufsatzteil ein RFID-Chip vorhanden sein, der entsprechende Spielinformationen speichert und die von dem Handteil des Pflegewerkzeugs aufgerufen und auf den Spielecontroller übertragen werden, der dann die entsprechenden Spielinformationen auf der Anzeigevorrichtung zur Darstellung bringt. Alternativ oder zusätzlich kann an dem genannten Aufsatzteil auch nur ein Identifikationscode gespeichert sein, mit dem zusammen verknüpft entsprechende Spielinformationen an anderer Stelle in einem Speicher abgelegt sind, so dass durch Abfragen des Identifikationscodes des jeweils angedockten Aufsatzteils an anderer Stelle die dazu gespeicherten Spieleinformationen aufrufbar sind.

In vorteilhafter Weiterbildung der Erfindung kann hierbei die Adressierung der abgespeicherten Daten programmierbar sein, so dass von einem Gerätebenutzer festgelegt werden kann, welcher Datensatz bei Identifizierung eines bestimmten Aufsatzteils auf der Anzeigevorrichtung zur Anzeige gebracht wird.

Um eine noch weitergehende Individualisierung der Bildschirmdarstellungen zu ermöglichen, ist nicht nur eine Auswahl zwischen vorab konfigurierten Bildschirmdarstellungen möglich, sondern eine Modifizierung, Abänderung und/oder Generierung von Bildschirmdarstellungen ermöglicht. Insbesondere ist vorgesehen, dass die gespeicherten Darstellungen zur Anzeige auf der Anzeigevorrichtung mittels einer an dem Körperpflegegerät vorgesehenen Eingabevorrichtung individuell abänderbar und/oder gestaltbar ausgebildet und in dem Speicherbaustein mit einem Individualcode verknüpft abspeicherbar sind. Die individuelle Programmierbarkeit der Darstellungen über die Auswahl vorgespeicherter Varianten hinaus erlaubt eine vielfältige Anpassung der Nutzung der Anzeigevorrichtung an unterschiedliche Bedürfnisse. Die Abänderbarkeit der Darstellungen kann hierbei grundsätzlich verschieden ausgebildet sein. Beispielsweise können gespeicherte Darstellungen jeweils einen unveränderbaren Grundabschnitt und zumindest einen ergänzbaren Einfügeabschnitt zur Ergänzung der gespeicherten Darstellung durch eine individuell gestaltete Darstellung aufweisen. Beispielsweise können in den gespeicherten Darstellungen Namensfenster individuell programmierbar sein, beispielsweise einem animierten Avatar durch einen speziellen Namen zu kennzeichnen, der dann zusammen mit dem Avatar auf der Anzeigevorrichtung dargestellt wird. Dies ermöglicht es beispielsweise, individuell gekennzeichnete Figuren in Videospielen zu generieren.

Die genannte Eingabevorrichtung zur individuellen Abänderung und/oder Gestaltung der Darstellungen kann hierbei grundsätzlich verschieden ausgebildet sein. Beispielsweise kann ein Touchscreen zur Eingabe der individuellen Abänderungen und/oder Gestaltungen vorgesehen sein, wobei insbesondere die Anzeigevorrichtung selbst ein Anzeigeelement in Form eines solchen Touchscreens aufweisen kann, so dass individuell an den Darstellungen Änderungen vorgenommen werden können.

Alternativ oder zusätzlich kann eine Eingabevorrichtung in Form einer Programmiersteuertaste vorzugsweise in Form einer Cursor-Steuertaste zum Anklicken von Display-Schaltflächen und/oder Eingabebefehlen vorgesehen sein, wobei eine solche Programmiersteuertaste an der Anzeigevorrichtung und/oder einer Basisstation vorgesehen sein kann. Vorteilhafterweise kann eine solche Programmiersteuertaste auch an dem Pflegewerkzeug vorgesehen sein, so dass von dem Pflegewerkzeug her die Darstellungen auf der Anzeigevorrichtung individuell abgeändert und/oder gestaltet werden können.

In Weiterbildung der Erfindung kann eine solche Steuertaste insbesondere dann, wenn sie an dem Pflegewerkzeug vorgesehen ist, in Abhängigkeit von der auf dem Bildschirm dargestellten Darstellung veränderbar belegt sein, vorzugsweise derart, dass die Steuertaste bei Ablauf eines Videospiels auf der Anzeigevorrichtung eine Steuertaste zur Steuerung des Videospiels, insbesondere eine Navigationstaste zum Navigieren eines virtuellen Bildschirmelements und/oder eines Avatars über die Anzeigevorrichtung und/oder über das darauf dargestellte Hintergrundbild hin bildet. Wird andererseits anstelle eines solchen Videospiels auf der Anzeigevorrichtung ein Konfigurationsmenü dargestellt, kann die genannte Steuertaste an dem Pflegegerät eine Navigationstaste zur Steuerung durch das Menü bilden, das beispielsweise das Anklicken verschiedener Menüflächen gestattet. Die Steuertaste am Pflegewerkzeug besitzt daher vorteilhafterweise eine Doppel- oder Mehrfachfunktion. Statt des Videospiels oder zusätzlich können Informationen und Auswertungen zum Putzverhalten und die aktuelle oder/und vergangene Putzzeiten dargestellt werden. Auch andere Erwachsenen-Funktionen, die sich mehr an einen Erwachsenenzielgruppe bezüglich des Informationsgehalts richten, sind an dieser Anzeigevorrichtung anzeigbar.

In Weiterbildung der Erfindung sind die individuell abgeänderten und/oder generierten Darstellungen und/oder Informationen individuell speicherbar, vorzugsweise zusammen mit einem ein jeweiliges Aufsatzteil des Pflegwerkzeugs identifizierenden Code und/oder in einem an dem Aufsatzteil vorgesehenen Speicherbaustein, so dass bei Aufsetzen des jeweiligen Aufsatzteils die individuell generierten Daten aufgerufen und zur Anzeige auf dem Bildschirm der Anzeigevorrichtung gebracht werden können.

Vorteilhafterweise ist die Anzeigevorrichtung trotz ihrer Steuerbarkeit von dem Pflegewerkzeug her weder fest an einer Basisstation noch fest am Pflegewerkzeug angeordnet, sondern sozusagen frei platzierbar, so dass es an der jeweils günstigsten Stelle abgestellt werden kann. In Weiterbildung der Erfindung bildet die Anzeigevorrichtung einen von der Basisstation und dem Pflegewerkzeug separat ausgebildeten und separat positionierbaren Baustein, der eine Kommunikationsschnittstelle zur Kommunikation mit der Basisstation und/oder mit dem Pflegewerkzeug auch im separaten Zustand aufweist. Durch Ausbildung der Anzeigevorrichtung als Stand-alone-Modul kann die Anzeigevorrichtung unabhängig von der Position der Basisstation an den für ein Kind oder auch einen Erwachsenen gut einsehbaren Platz positioniert werden, so dass die Sichtbarkeit auch beim bestimmungsgemäßen Hin- und Herbewegen des Pflegewerkzeugs - im Falle einer Zahnbürste entsprechend den Putzbewegungen im Mund - gut einsehbar ist. Trotzdem kann die Bildschirmdarstellung vorzugsweise in Form eines Videospiels interaktiv von dem Pflegewerkzeug her über die Kommunikationsschnittstelle des Displays gesteuert werden. Hierzu kann das Pflegewerkzeug eine Kommunikationsverbindung direkt zu dem Anzeigebaustein besitzen oder damit indirekt über die Basisstation kommunizieren.

Um trotz beliebiger Platzierbarkeit der Anzeigevorrichtung ohne von der Basisstation abhängigen Aktionsradius eine einfache und effiziente Energieversorgung der Anzeigevorrichtung zu erzielen, ist in vorteilhafter Weiterbildung der Erfindung die Anzeigevorrichtung mit einem ladbaren Energiespeicher versehen, der durch Andocken der Anzeigevorrichtung an die Basisstation ladbar ist. In Weiterbildung der Erfindung sind sowohl die Anzeigevorrichtung als auch das Pflegewerkzeug an der Basisstation aufladbar.

Zusätzlich zu der genannten separat ausgebildeten Anzeigevorrichtung kann das Pflegewerkzeug eine am Pflegewerkzeug selbst angebrachte Anzeigevorrichtung umfassen, beispielsweise um ergänzend zu der separat ausgebildeten Anzeigevorrichtung auf besondere Ereignisse hinzuweisen oder andere Informationen zu transportieren. In Weiterbildung der Erfindung kann das Pflegewerkzeug eine Anzeige umfassen, die von einer Steuervorrichtung in Abhängigkeit des Spieleablaufs auf der separaten Anzeigevorrichtung und/oder in Abhängigkeit eines Betriebsparameters des Pflegewerkzeugs selbst steuerbar ist. Beispielsweise kann die am Pflegewerkzeug selbst vorgesehene Anzeige dazu genutzt werden, um auf besonders interessante oder wichtige Spielsituationen an der separaten Anzeigevorrichtung hinzuweisen.

Die werkzeugseitige Anzeigevorrichtung kann grundsätzlich verschieden ausgebildet sein, wobei in Weiterbildung der Erfindung am Pflegewerkzeug selbst einfachere Anzeigemittel als an der separaten Anzeigevorrichtung vorgesehen sind. In vorteilhafter Weiterbildung der Erfindung kann das Pflegewerkzeug einen beleuchtbaren Gehäuseabschnitt aufweisen und/oder ein auf das Werkzeuggehäuse aufsetzbares Leuchtelement umfassen. Bei einem Pflegewerkzeug in Form einer Zahnbürste kann in Weiterbildung der Erfindung ein Leuchtring am stirnseitigen Ende des Handstücks vorgesehen sein, das in verschiedene Leuchtzustände wie beispielsweise ein Blinken und/oder in unterschiedliche Farben bringbar ist.

Wird die werkzeugseitige Anzeige in Weiterbildung der Erfindung in Abhängigkeit des Spielablaufs auf der separaten Anzeigevorrichtung gesteuert, kann beispielsweise dann, wenn das Spiel auf der separaten Anzeigevorrichtung einen Steuerbefehl als Eingabe erwartet oder benötigt, ein Signal auf der werkzeugseitigen Anzeige beispielsweise in Form eines Aufblinkens gegeben werden.

Das Anzeigeelement der separaten Anzeigevorrichtung ist vorteilhafterweise indes komplexer ausgebildet. Insbesondere ist ein elektronisches Anzeigepaneel beispielsweise in Form eines LCD-Bildschirms vorgesehen.

Diese und weitere Merkmale gehen außer aus den Ansprüchen auch aus den Zeichnungen und der nachfolgenden Beschreibung hervor, mittels derer anhand der Zeichnungen bevorzugte Ausführungen der Erfindung erläutert werden, wobei die Merkmale für sich oder in Unterkombination unabhängig von ihrer Zusammenfassung in den Ansprüchen den Gegenstand der vorliegenden Erfindung bilden können. In den Zeichnungen zeigen:
- Fig. 1:: eine schematische Darstellung eines Körperpflegegeräts in Form einer Zahnputzvorrichtung, die eine Zahnbürste sowie eine Anzeigevorrichtung zur Anzeige eines interaktiv steuerbaren Zahnputzspiels umfasst, die beide auf einer Basisstation geladen werden können,
- Fig. 2:: eine schematische Darstellung des Ablaufs des interaktiv steuerbaren Zahnputzspiels auf dem Bildschirm der Anzeigevorrichtung, wobei die genannte Anzeigevorrichtung in mehreren Darstellungen zu verschiedenen Zeitpunkten des Spiels dargestellt ist,
- Fig. 3:: eine schematische Ansicht der auf der Basisstation abgestellten Zahnbürste, die deren Verwippbarkeit auf der Basisstation zur Verdeutlichung der magnetisch arbeitenden Haltemittel zeigt,
- Fig. 4:: eine ausschnittsweise Darstellung eines händisch betätigbaren Navigationsschalters an der Zahnbürste zur Steuerung des Avatars des interaktiv steuerbaren Spiels,
- Fig. 5:: eine schematische Ansicht einer Umschalttaste an der Anzeigevorrichtung zur Umschaltung des Bildschirminhalts, und
- Fig. 6:: eine schematische, ausschnittsweise Darstellung von Bildschirmsteuertasten an dem Handteil des Pflegewerkzeugs in Form einer Zahnbürste.

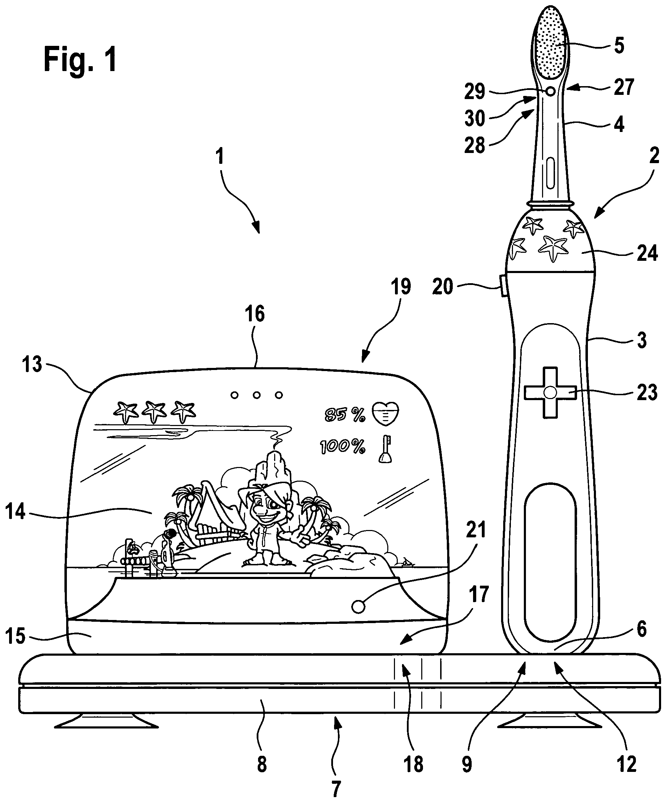

Die in Fig. 1 gezeigte Zahnputzvorrichtung 1 umfasst eine elektrische Zahnbürste 2, die ein ein Griffstück bildendes Handteil 3 sowie ein daran lösbar befestigtes Aufsatzteil 4 umfasst, das in der gezeichneten Ausführungsform eine Aufsatzbürste mit einem Borstenfeld 5 ist, ggf. aber auch andere Reinigungselemente wie Kunststoffstreifen, Interdentalreiniger oder dergleichen aufweisen kann.

Im Inneren des Handteils 3 ist ein Antriebsmotor untergebracht, der über einen geeignet ausgebildeten Antriebsstrang das Borstenfeld 5 des Aufsatzteils 4 antreiben kann. Weiterhin ist im Inneren des Handteils 3 ein Energiespeicher in Form eines Akkus vorgesehen, der über einen Ladeanschluss 6 ladbar ist. Der genannte Ladeanschluss 6 befindet sich vorteilhafterweise an einem hinteren Endabschnitt des Handteils 3, mit dem dieser auf einer Basisstation 7 abgelegt bzw. abgestellt werden kann, um einerseits im Nichtbetrieb aufgeräumt zu sein und andererseits geladen werden zu können.

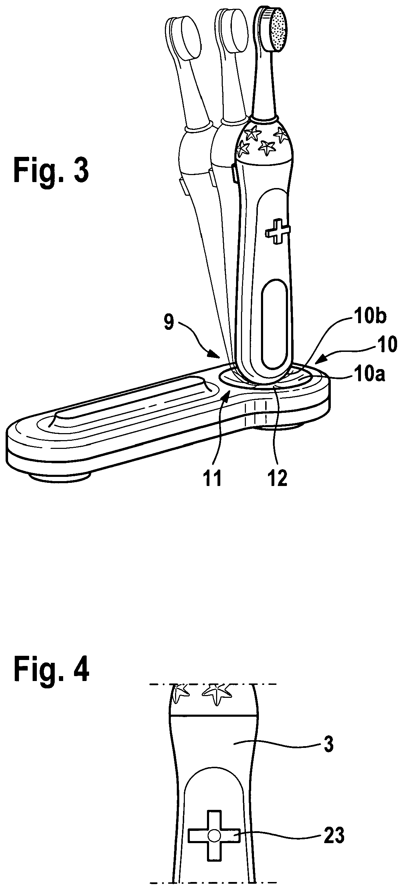

Wie Fig. 3 zeigt, steht die Zahnbürste 3 aufrecht auf dem im Wesentlichen nach Art einer flachen Platte ausgebildeten Stationskorpus 8 der Basisstation 7, wobei nach einer vorteilhaften Ausführung der Erfindung der aufrechte Stand ohne einen verriegelnden Formschluss oder dergleichen erzielt wird, so dass die aufrecht stehende Zahnbürste 2 hin und her wippen kann, wie dies Fig. 3 verdeutlicht.

Hierzu sind einerseits als Lagermittel 9 ein formangepasstes Lagerflächenpaar 10 vorgesehen, die ein jeweils mehrachsig gekrümmtes Wippflächenpaar bilden, dessen Flächenstücke sich aneinander anschmiegen. Konkret ist in der gezeichneten Ausführungsform die Lagerfläche 10a des Stationskorpus 8 in Form einer rotationssymmetrischen Mulde ausgebildet, während das stirnseitige Ende des Handteils 3 der Zahnbürste 2 ein eiförmiges bzw. kalottenförmig oder in anderer Weise rotationssymmetrisch konvex gewölbtes Flächenstück bildet, das sich in die genannte Lagermulde 10a einschmiegt. Vorteilhafterweise kann eine der Lagerflächen 10a bzw. 10b oder auch beide eine Abflachung aufweisen, um einen zentrierten Stand zu ermöglichen.

Um die abgestellte Zahnbürste 2 in ihrem aufrechten Stand zu halten, sind im Bereich der Lagermittel 9 zwischen der Zahnbürste 2 und der Basisstation 7 wirkende magnetische Haltemittel 11 vorgesehen, die zentrierend wirken und die genannte Zahnbürste 2 in ihrer senkrecht stehenden Ruhestellung halten. Die genannten magnetischen Haltemittel 11 können hierbei einen Permanentmagneten in der Basisstation 7 enthalten, der auf ein metallisches Lagerelement beispielsweise in Form eines Lagerrings im Endstück des Handteils 3 wirkt. Die magnetischen Haltemittel 11 sind dabei vorteilhafterweise derart ausgebildet, dass auf den Handteil 3 ein rückstellendes Moment wirkt, wenn der Handteil 3 aus seiner zentrierten Sollstellung ausgelenkt ist bzw. wird. Diese Rückstellvorrichtung wird in der gezeichneten Ausführung von den magnetischen Haltemitteln 11 gebildet.

Die Zahnbürste 2 wird dabei von dem Basisteil 7 her vorteilhafterweise induktiv geladen. Dabei ist der Ladeanschluss 6 des Handteils 3 induktiv arbeitend ausgebildet ebenso wie ein an der Basisstation 7 vorgesehener, damit zusammenwirkender Ladeanschluss 12. Beide Ladeanschlüsse 6 und 12 sind vorteilhafterweise zur Umgebung hin abgedeckt bzw. gekapselt. Insbesondere können sie unter dem Gehäuse des Handteils 3 bzw. der Basisstation 7 angeordnet sein, so dass ein berührungsloses Übertragen des Ladestroms erfolgt. Damit die Magnetfelder der Standeinrichtung sich nicht mit dem elektromagnetischen Wechselfeld gegenseitig abschwächend überlagern können beide Einrichtungen "verschachtelt" zueinander angeordnet sein. Z.B. ist in einer Variante der Standmagnet so ausgebildet, dass dieser die Induktionspulen für die elektromagnetische Kopplung (zur Übertragung des Ladestromes) umschließt. Auch eine umgekehrte Anordnung mit den Standmagneten umschließender Spule ist in einer weiteren Variante vorgesehen. Der Standmagnet ist in der Basisstation oder/ und im unteren Abschnitt des Handgriffes angeordnet. Dieser Gegenstand der induktiven Energieübertragung mit Standmagnet ist beliebig mit anderen Ausführungsformen kombinierbar und kann auch unabhängiger Gegenstand der Erfindung sein.

Die Basisstation 7 dient weiterhin als Ablage für eine Anzeigevorrichtung 13, die vorteilhafterweise ein elektronisches Anzeigeelement 14 in Form eines Bildschirms bzw. Displays umfasst, das beispielsweise als LCD-Bildschirm ausgebildet sein kann.

Die genannte Anzeigevorrichtung 13 ist hierbei separat von der Basisstation 7 als Standalone-Einheit ausgebildet, die an die Basisstation 7 angedockt werden kann, um von Letzterer geladen zu werden, aber auch von der Basisstation 7 entfernt separat betrieben werden kann.

In der gezeichneten Ausführungsform umfasst die Anzeigevorrichtung 13 hierbei einen Basiskorpus 15, der den Boden der Anzeigevorrichtung 13 bildet und das genannte Anzeigeelement 14 trägt. Über das genannte Anzeigeelement 14 ist in vorteilhafter Ausbildung der Erfindung eine transparente Abdeckglocke 16 gestülpt, die das Anzeigeelement 12 abdeckt bzw. einkapselt und vorteilhafterweise fluiddicht mit dem genannten Basiskorpus 15 verbunden ist, so dass das Anzeigeelement 12 unter der Abdeckglocke 13 eingebettet ist.

Zur Energieversorgung des Anzeigeelements 14 ist in den Basiskorpus 15 ein Energiespeicher in Form eines Akkus integriert, der über einen Ladeanschluss 17 von der Basisstation 7 her ladbar ist. Vorteilhafterweise sind auch hier der Ladeanschluss 17 an der Anzeigevorrichtung 13 sowie der damit zusammenwirkende Ladeanschluss 18 der Basisstation 7 induktiv arbeitend ausgebildet, so dass der Ladestrom berührungslos übertragen werden und die Ladeanschlüsse 17 bzw. 18 gegen Feuchtigkeit eingebettet, insbesondere unter dem Gehäuse des jeweiligen Teils abgedeckt sein können.

Wie Fig. 1 zeigt, bildet die Unterseite des Basiskorpus 15 der Anzeigevorrichtung 13 eine Aufstandsfläche, mit der die Anzeigevorrichtung 13 auf einer beliebigen ebenen Fläche abgestellt werden kann.

Mittels einer nicht eigens gezeigten Kommunikationsschnittstelle 19 kann die Anzeigevorrichtung 13 mit der Zahnbürste 2 kommunizieren. Zur drahtlosen Kommunikation ist hierbei an der Anzeigevorrichtung 13 ein Sender/Empfänger-Baustein vorgesehen, mit dem ein entsprechender Sender/Empfänger-Baustein am Handteil 3 der Zahnbürste kommunizieren kann, wobei vorteilhafterweise Daten in beide Richtungen übertragen werden können. Beispielsweise kann eine Bluetooth-Schnittstelle an der Anzeigevorrichtung 13 sowie der Zahnbürste 2 vorgesehen sein, um eine Bluetooth-Verbindung zwischen beiden Teilen aufzubauen.

Die Anzeigevorrichtung 13 weist weiterhin eine Steuervorrichtung 20 auf, die die Darstellungen auf dem Anzeigeelement 12 steuert und von dem Handteil 3 der Zahnbürste 2 erhaltene Steuerbefehle in entsprechende Grafikbefehle für die Bildschirmdarstellung umsetzt.

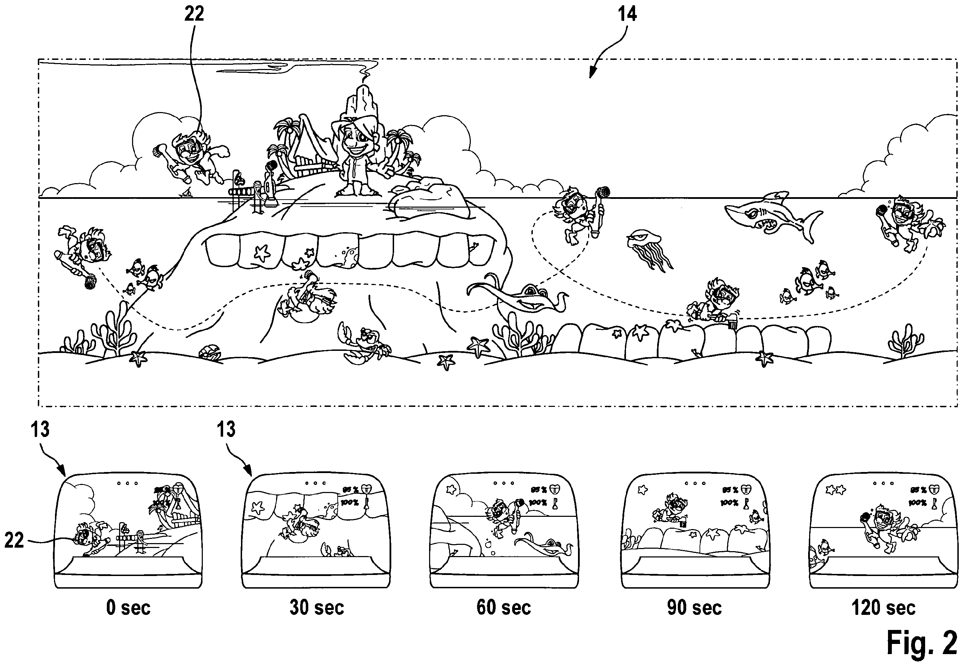

Insbesondere kann die genannte Steuervorrichtung 21 ein Videospiel auf dem Anzeigeelement 14 darstellen und interaktiv steuern, das einen Körperpflegezyklus simuliert, so wie dies in Fig. 2 exemplarisch dargestellt ist.

Vorteilhafterweise wird auf dem Anzeigeelement 14 zumindest ein Avatar 22 und/oder ein virtuelles Element dargestellt, das über den Bildschirm bewegbar bzw. führbar und/oder über den Bildschirmhintergrund bewegbar und führbar ist. In der gezeichneten Ausführung wird der Avatar 22 von einer Kinderfigur gebildet, die über eine Insel sowie in der Unterwasserwelt vor der Insel bewegbar ist, um ein unter Wasser liegendes Riff, das die Zähne eines zu reinigenden Gebisses versinnbildlicht, zu reinigen.

Der genannte Avatar 22 kann hierbei durch die Zahnbürste 2 über die Bildschirmdarstellung bzw. das Anzeigeelement 14 navigiert werden. Hierzu umfasst der Handteil 3 der Zahnbürste 2 Navigationssteuermittel zur Erzeugung von Navigationsbefehlen, die über die genannte Kommunikationsschnittstelle 19 bzw. 20 auf die Steuervorrichtung 21 übertragen werden und die Bewegung des Avatars 22 auf dem Anzeigeelement 14 steuern. In der gezeichneten Ausführung gemäß Fig. 4 umfassen hierbei die genannten Navigationssteuermittel einerseits einen händisch betätigbaren Navigationsschalter 23, der grundsätzlich verschieden ausgebildet sein kann und beispielsweise nach Art eines an Laptops bekannten Mouseballs gestaltet sein kann, der Betätigungen bzw. Kraftbeaufschlagungen in verschiedenen Richtungen erkennt und in Navigationssteuersignale verschiedener Richtungen umsetzt.

Um Kindern die Navigation des Avatars 22 zu vereinfachen, ist der Navigationsschalter 23 am Handteil 3 vorteilhafterweise als Vierfachdruckschalter ausgebildet, der in vier Richtungen orientierte Druckabschnitte aufweist, die vorteilhafterweise nach Art eines Kreuzes zueinander positioniert sind. Durch Niederdrücken eines oder auch zweier nebeneinander liegender Druckabschnitte kann ein in die entsprechende Richtung gehendes, ggf. auch überlagertes Navigationssteuersignal erzeugt werden, das in eine Bewegung des Avatars in die entsprechende Richtung umgesetzt wird. Hierbei kann eine feste Richtungszuordnung zwischen den Druckabschnitten und dem Bildschirm vorgegeben sein, beispielsweise dergestalt, dass das Niederdrücken des zum Aufsatzteil 4 hin gerichteten Druckabschnitts stets eine Bewegung des Avatars 22 nach oben zum oberen Bildschirmrand hin usw. bewirkt. Alternativ kann die Richtungszuordnung auch von der Ausrichtung der in der virtuellen Darstellung gezeigten Bürste abhängen, so dass die virtuelle Darstellung der Bürste ungeachtet ihrer Drehstellung im Bildschirm beispielsweise stets nach rechts quer zur Längsachse der virtuellen Bürstendarstellung bewegt wird, wenn der an der echten Zahnbürste rechts liegende Druckabschnitt niedergedrückt wird. Dies ist jedoch ein komplexeres Steuerverfahren, das weniger für Kinder geeignet ist, gleichwohl jedoch den Spielanreiz für Erwachsene erhöhen kann. Alternativ ist der Navigationsschalter 23 ein Taster, der zu betätigen ist, sobald bestimmte Positionen/Konfigurationen auf dem Display zu erkennen sind. Weiter alternativ ist der Navigationsschalter 23 auch als Ein/Aus Schalter der elektrischen Zahnbürste (z.B. mit längerer Andrückzeit, um die Zahnbürste Ein und Auszuschalten als zum bedienen der Displayfunktionen. In weiterer Alternative sind der Ein/Aus-Schalter der elektrischen Zahnbürste und der Navigationsschalter 23 separat, vorzugsweise an zwei gegenüberliegenden oder sonstigen Seiten des Zahnbürstenhandgriffes ausgebildet.

Alternativ oder zusätzlich zu dem genannten händisch betätigbaren Navigationsschalter 23 können andererseits Navigationssteuersignale an dem Handteil 3 auch aus Betriebsparametern der Zahnbürste und/oder Körperpflegeparametern 2 abgeleitet werden. Insbesondere können mittels geeigneter Erfassungsvorrichtungen beispielsweise in Form von Bewegungs-und/oder Beschleunigungssensoren Bewegungs- bzw. Beschleunigungssignale erzeugt werden, die den Bewegungen, insbesondere Putzbewegungen der Zahnbürste 2 entsprechen, so dass die virtuelle Darstellung des Avatars 22 und/oder des von diesem gehaltenen virtuellen Bürstenteils entsprechend den tatsächlichen Bewegungen der Zahnbürste 2 navigiert wird. Vorteilhafterweise kann in die Zahnbürste 2 auch ein Neigungssensor integriert sein, der die Neigung bzw. Orientierung der Zahnbürste 2 im Raum erfasst, so dass der Avatar 22 nicht nur hin und her bewegt, sondern auch verkippt werden kann. Vorteilhafterweise wird die Bildschirmdarstellung des Avatars 22 synchron mit den Bewegungen und/oder Druckschalterbetätigungen an der Zahnbürste 2 bewegt.

Insbesondere kann die Zahnbürste 2 eine Erfassungseinrichtung 27 besitzen, die Positionserfassungsmittel 28 aufweist, mittels derer die Relativposition der Zahnbürste 2 relativ zu den zu putzenden Zähnen erfasst werden kann, bzw. entsprechende Daten erfasst werden können, anhand derer dann die Relativposition bestimmt werden kann.

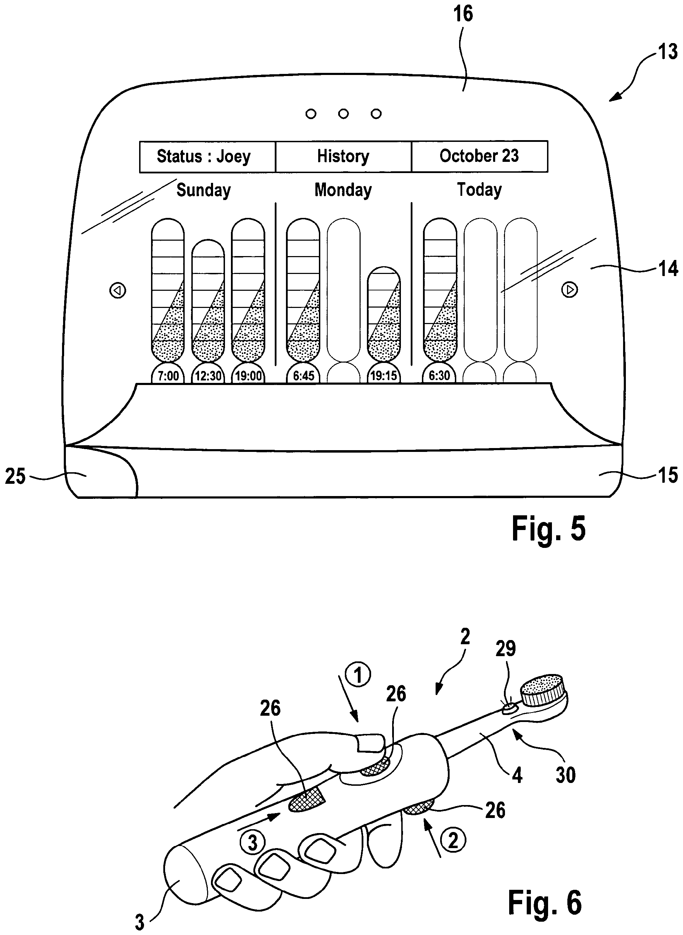

Insbesondere kann an der Zahnbürste 2 vorzugsweise im Bereich von deren Aufsatzteil 4 und/oder des Borstenfelds 5 eine Kamera 29 vorgesehen sein, die ein Bild der vor der von den freien Enden der Borsten gebildeten Oberfläche des Borstenfelds 5 liegenden Zahnkontur erfasst. Wie Fig. 1 und 6 zeigen, ist die Kamera 29 mit ihrer Sichtachse - grob gesprochen - parallel oder nur spitzwinklig geneigt zu der Hauptachse der Borsten des Borstenfelds 5 ausgerichtet. Obwohl in der gezeichneten Ausführungsform nur eine Kamera 29 neben dem Borstenfeld 5 am Zahnbürstenkopf positioniert ist, können in Weiterbildung der Erfindung auch mehrere Kameras vorgesehen sein.

Die Kamera 29 bildet einen Baustein von Objekterkennungsmitteln 30, die anhand der Bilder der Kamera 29 den jeweiligen Zahn und/oder Gebissteil und/oder Mundhöhlenteil identifizieren, an dem bzw. in dem sich das Borstenfeld 5 der Zahnbürste jeweils befindet.

Zusammen mit den Daten der zuvor genannten Sensoren, wie beispielsweise Geschwindigkeitssensor, Anpressdrucksensor, Neigungssensor etc. kann hierdurch jeweils bestimmt werden, in welcher Weise die Zahnbürste 2 über welchen Zahn bzw. Gebissabschnitt bewegt wird.

Aus den bestimmten Positions-, Betriebs- und/oder Körperpflegedaten sowie den Objektkennungsdaten kann ein Auswertebaustein der Steuervorrichtung 21 Navigationssteuersignale generieren, um den Avatar 22 in der virtuellen Darstellung gemäß Fig. 2 über die Abschnitte des dort dargestellten Riffs, die die Zähne des zu putzenden Gerätebenutzers symbolisieren, zu steuern.

In der eingangs genannten Weise kann eine Simulationsvorrichtung, die softwaretechnisch in der genannten Steuervorrichtung 21 ausgebildet sein kann, die Animationen der virtuellen Darstellung gemäß Fig. 2 in der vorgenannten Weise steuern, beispielsweise auch in der genannten Weise Anzeigen der Soll- und Istwerte der Körperpflegeparameter, der erfassten Bewegungsbahn im Vergleich zu einer Sollbewegungsbahn und/oder Veränderungen der Animationen bei beispielsweise zu hohem Anpressdruck simulieren.

Um den Unterhaltungswert zu erhöhen, kann die animierte Simulation des Putzvorgangs mit weiteren Spiele-Features kombiniert werden, die in der genannten Weise durch händisch eingebbare Steuerbefehle und/oder spezielle Bewegungen der Zahnbürste 2 gesteuert werden können. Beispielsweise kann die in der großen Darstellung der Fig. 2 gezeigte Krabbe unter dem das Oberriff putzenden Avatar durch Betätigung der zuvor genannten Navigationstaste 23 von dem Avatar 22 ferngehalten werden. Andere oder zusätzlich Spielsteuerbefehle können ebenfalls verlangt und/oder beliebig eingebbar integriert sein. Alternativ ist der Navigationsschalter 23 ein Taster, der zu betätigen ist, sobald bestimmte Positionen/Konfigurationen auf dem Display zu erkennen sind. Weiter alternativ ist der Navigationsschalter 23 auch als Ein/Aus Schalter der elektrischen Zahnbürste (z.B. mit längerer Andrückzeit, um die Zahnbürste Ein und Auszuschalten als zum bedienen der Displayfunktionen. In weiterer Alternative sind der Ein/Aus-Schalter der elektrischen Zahnbürste und der Navigationsschalter 23 separat, vorzugsweise an zwei gegenüberliegenden oder sonstigen Seiten des Zahnbürstenhandgriffes ausgebildet.

Wie Figur 5 zeigt, ist die Bildschirmdarstellung der Anzeigevorrichtung 13 durch eine Umschaltvorrichtung von dem in den vorhergehenden Figuren gezeigten Videospiel auf einen mit dem Videospiel nicht in Verbindung stehenden Informationsinhalt umschaltbar, wobei hier grundsätzlich in der eingangs genannten Weise verschiedene Informationen dargestellt werden können. In der gezeichneten Ausführungsform wird eine statische Auswertung der Putzzeit an bestimmten Tagen dargestellt, die von einem Auswertebaustein der Steuervorrichtung 21 generiert werden. Es könnten prinzipiell auch andere Betriebsparameter ausgewertet und dargestellt werden. Vorteilhafterweise werden die ausgewerteten Betriebsdaten individuell abgespeichert, dass heißt einem jeweiligen Benutzer zugeordnet gespeichert derart, dass sie auch individuell wieder aufrufbar sind. Dies kann vorteilhafterweise dergestalt erfolgen, dass die ausgewerteten Betriebsparameter und/oder die anderen Informationen zusammen mit einem Identifikationscode abgespeichert werden, der einem Aufsatzteil der Zahnbürste zugeordnet ist. Im gezeichneten Ausführungsbeispiel sind die Putzzeiten für einen Benutzer namens Joey dargestellt.

Die Umschaltvorrichtung zur Umschaltung der Bildschirmdarstellung von dem Videospiel auf die Auswertungen und umgekehrt kann mittels einer Umschalttaste 25 betätigt werden, die in der in Figur 5 gezeichneten Ausführungsform an der Anzeigevorrichtung 13 in Form eines Druckschalters vorgesehen ist. Sind von dem Auswertebaustein der Steuervorrichtung 21 verschiedene Auswerte-Datensätze generiert worden, beispielsweise um verschiedene Auswertungen verschiedener Betriebsparameter eines Benutzers oder die ausgewerteten Betriebsparameter verschiedener Benutzer bereit zu stellen, kann durch die genannte Umschalttaste 25 durch mehrmaliges Drücken der Reihe nach zwischen den verschiedenen Bildschirmdarstellungen umgeschaltet werden. Wie Figur 6 zeigt, kann auch an dem Handteil 3 der Zahnbürste 2 eine Bildschirmsteuertaste 26 vorgesehen sein, die grundsätzlich verschiedene Funktionen des Bildschirms steuern können. Insbesondere kann eine solche Steuertaste 26 eine Umschalttaste bilden, mittels derer die Bildschirminhalte in der genannten Art und Weise weitergeschaltet werden können und/oder zurückgeschaltet werden können.

Wie Figur 6 zeigt, kann die Steuertaste 25 hierbei grundsätzlich an verschiedenen Stellen angeordnet sein und/oder es können mehrere solcher Steuertasten 26 vorgesehen sein. Vorteilhafterweise kann eine Steuertaste auf einer Vorderseite des Handteils 3 insbesondere im Abschnitt, in dem ein Daumen zu liegen kommt, angeordnet sein. Alternativ oder zusätzlich kann eine Steuertaste 26 auf der Rückseite des Handteils 3, insbesondere im Bereich eines dort zu liegen kommenden Fingers platziert sein.

Alternativ oder zusätzlich kann eine Steuertaste 26 auch in einem anderen Abschnitt des Griffteils vorgesehen sein.

Die Belegung der Steuertaste 26 kann grundsätzlich verschieden ausgebildet sein, insbesondere veränderlich ausgebildet sein, beispielsweise dergestalt, dass in Abhängigkeit des Betriebszustands der Zahnbürste 2 und/oder in Abhängigkeit des auf der Anzeigevorrichtung 13 dargestellten Bildschirminhalts der Steuertaste 26 verschiedene Funktionen zugeordnet sind. Läuft beispielsweise ein Videospiel auf der Anzeigevorrichtung 13, kann eine Steuertaste 26 die genannte Umschalttaste zum Umschalten des Bildschirminhalts bilden. Die genannte oder eine weitere Steuertaste 26 kann alternativ dann, wenn ein Videospiel auf der Anzeigevorrichtung 13 läuft, eine Betätigungstaste zur Betätigung von Spielfunktionen, beispielsweise von Aktionen des Avatars 22 bilden. Wird indes beispielsweise die Anzeigevorrichtung als elektronischer Bilderrahmen verwendet, dem von einer Bildspeicherquelle her Bilder eingespielt werden, kann eine der genannten Steuertasten 26 dahingehend belegt sein, dass sie ein Weiterschalten von Bild zu Bild bewirken. Ist andererseits auf dem Bildschirm der Anzeigevorrichtung 13 ein Steuerungsmenü dargestellt, beispielsweise vor Beginn eines Spiels, um ein bestimmtes Spiel auszuwählen, kann die genannte Steuertaste 26 eine Eingabetaste zur Betätigung von Schaltflächen bilden.

Alternativ oder zusätzlich kann auch die zuvor genannte Navigationstaste 23 eine variable Belegung besitzen, die insbesondere in Abhängigkeit des Betriebszustands des Pflegewerkzeugs und/oder in Abhängigkeit eines auf der Anzeigevorrichtung 13 dargestellten Bildschirminhalts verändert wird. Ist beispielsweise in der zuvor genannten Weise ein Steuerungsmenü dargestellt, kann die genannte Navigationstaste 23 einen Navigationscursor bilden, um durch das Steuerungsmenü zu navigieren und entsprechende Schaltflächen durch Anklicken - beispielsweise durch schnell aufeinander folgendes Doppelklicken eines Betätigungsabschnitts - auszuwählen. Wird indes ein Videospiel auf der Anzeigevorrichtung 13 dargestellt, kann die genannte Navigationstaste 23 in der beschriebenen Art und Weise dazu verwendet werden, den Avatar 22 zu steuern.

Alternativ oder zusätzlich kann die genannte Steuertaste 26 und/oder die genannte Navigationstaste 23 in einem Programmiermodus dazu verwendet werden, Bildschirminhalte individuell abzuändern und/oder individuell zu generieren bzw. zu gestalten, beispielsweise dadurch, dass in einem dem Avatar 22 zugeordneten Namensfenster ein individuell programmierbarer Name generiert wird, der dann in den Bildschirmdarstellungen des Videospiels verwendet wird.

Die technische Ausführung der genannten Navigations- und Steuertasten 23 bzw. 26 an dem Handteil 3 der Zahnbürste 2 kann grundsätzlich verschieden beschaffen sein. In vorteilhafter Weiterbildung der Erfindung sind jeweilige Schalter jeweils einer flexiblen Weichkomponente platziert, welche die Betätigung eines jeweils dahinter liegenden Tasters ermöglicht und sogleich für eine Abdichtung gegenüber Flüssigkeiten sorgt. Die genannte flexible Weichkomponente kann einen integralen Bestandteil des Gehäuses des Handteils 3 bilden, das beispielsweise in einem Zweikomponenten-Spritzgussverfahren hergestellt sein kann.

## Patentansprüche

1. Körperpflegegerät des persönlichen Bedarfs, insbesondere Zahnputzvorrichtung, mit einem handführbaren Pflegewerkzeug, insbesondere Zahnbürste (2), sowie einer Anzeigevorrichtung (13) zur Anzeige von interaktiven Darstellungen und einer Steuervorrichtung (21), die dazu ausgestattet ist, von dem Pflegewerkzeug her interaktiv die Darstellungen zu steuern, wobei eine Erfassungseinrichtung (27) zur Erfassung zumindest eines die Körperpflege und/oder das Pflegewerkzeug betreffenden Betriebsparameters vorgesehen ist und die Steuervorrichtung (21) dazu ausgestattet ist, die Darstellungen in Abhängigkeit des Betriebsparameters zu steuern, wobei die Erfassungseinrichtung (27) Positionserfassungsmittel (28) zur Erfassung der Relativposition des Pflegewerkzeugs relativ zu dem zu pflegenden Körperteil des Gerätenutzers aufweist und die Steuervorrichtung (21) dazu ausgestattet ist, die Darstellungen in Abhängigkeit von der erfassten Relativposition zu steuern,
**dadurch gekennzeichnet, dass** die Erfassungseinrichtung (27) Objekterkennungsmittel (30) zur Erkennung eines Körperteils und damit zur Identifizierung der Relativposition des Pflegewerkzeugs zu dem zu pflegenden Körperteil aufweist und die Steuervorrichtung (21) die Darstellungen der Anzeigevorrichtung (13) anhand der erfassten Objektkennungsdaten und zumindest eines Betriebsparameters betreffend die Körperpflege und/oder das Pflegewerkzeug steuert und die Objekterkennungsmittel (30) eine optische Erfassungseinheit zur optischen Erfassung zumindest eines anatomischen Merkmals des Körperteils aufweisen, anhand dessen der Körperteil identifizierbar ist, wobei die optische Erfassungseinheit in Form einer separat platzierten Kamera vorgesehen ist, die einerseits das Pflegewerkzeug und andererseits den zu pflegenden Körperteil erfasst.

2. Körperpflegegerät nach dem vorhergehenden Anspruch, wobei das handführbare Pflegewerkzeug zumindest einen Abstandssensor, Neigungssensor, Bewegungssensor und/oder Beschleunigungssensor zur Erfassung des Abstands, der Neigung, der Bewegungsbahn, -strecke und/oder-richtung und/oder der Beschleunigung des Pflegewerkzeugs relativ zu dem Körperteil aufweist.

3. Körperpflegegerät nach Anspruch 1, wobei die optische Erfassungseinheit markierungslos arbeitend ausgebildet ist.

4. Körperpflegegerät nach einem der Ansprüche 1 bis 3, wobei die Objekterkennungsmittel (30) zumindest eine Bestimmungseinheit zur Bestimmung von Farben, Farbkontrasten, Oberflächenstrukturen, Strukturunterschieden, Materialkontrasten, Oberflächenkonturen und/oder räumlichen Geometrien aufweist.

5. Körperpflegegerät nach einem der vorhergehenden Ansprüche, wobei die Erfassungseinrichtung (27) Erfassungsmittel zur Erfassung eines Körperpflegeparameters individuell für den jeweils identifizierten Körperteil aufweist, wobei der genannte Körperpflegeparameter vorzugsweise zumindest eine Größe aus der Gruppe umfassend Pflegedauer, Pflegebewegung, Andruckkraft, bearbeitete Fläche und Anstellwinkel umfasst.

6. Körperpflegegerät nach einem der vorhergehenden Ansprüche, wobei die Steuervorrichtung (21) eine Simulationseinrichtung zur Simulation des Körperpflegevorgangs mittels einer virtuellen, animierten Darstellung auf der Anzeigevorrichtung (13) aufweist, deren Animation von einer Animationssteuereinheit in Abhängigkeit der erfassten Relativposition und/oder der erfassten Objektkennungsdaten steuerbar ist.

7. Körperpflegegerät nach dem vorhergehenden Anspruch, wobei die animierte Darstellung einen virtuellen Bildteil und/oder einen Avatar (22) umfasst, der synchron zu der erfassten Relativposition und/oder synchron zu dem zumindest einen die Körperpflege betreffenden Betriebsparameter gesteuert ist.

8. Körperpflegegerät nach einem der beiden vorhergehenden Ansprüche, wobei die Simulationseinrichtung Anzeigemittel zur Anzeige eines bereits bearbeiteten Körperteils und/oder eines noch zu bearbeitenden Körperteils aufweist.

9. Körperpflegegerät nach einem der vorhergehenden Ansprüche, wobei die Simulationseinrichtung Anzeigemittel zur Anzeige des Sollwerts und/oder des Istwerts eines Körperpflegeparameters in der virtuellen Darstellung aufweist, wobei der angezeigte Soll-und/oder Istwert vorzugsweise zumindest eine Größe aus der Gruppe umfassend Bewegungsbahn des Pflegewerkzeugs, Geschwindigkeit des Pflegewerkzeugs, Anpressdruck des Pflegewerkzeugs, Pflegedauer, bearbeitete Fläche umfasst.

10. Körperpflegegerät nach einem der vorhergehenden Ansprüche, wobei die Simulationseinrichtung Anzeigemittel zum Anzeigen einer Fehleranzeige in der virtuellen Darstellung bei einer übermäßigen Soll-/Istwertabweichung eines oder mehrerer Körperpflegeparameter aufweist.

11. Körperpflegegerät nach einem der vorhergehenden Ansprüche, wobei die Steuervorrichtung (21) einen Spiele- und/oder Simulationscontroller zur Steuerung eines Videospiels und/oder einer animierten Simulation auf der Anzeigevorrichtung (13) sowie einen Informationscontroller zur Bereitstellung von Informationen auf der Anzeigevorrichtung (13) umfasst, wobei eine Umschaltvorrichtung, die durch eine Umschalttaste (25, 26) betätigbar ist, zum Umschalten der durch den Spielecontroller generierten Spieldarstellung zu einer von dem Informationscontroller generierten Informationsdarstellung auf der Anzeigevorrichtung (13) und/oder umgekehrt vorgesehen ist.

12. Körperpflegegerät nach dem vorhergehenden Anspruch, wobei der genannte Informationscontroller eine Auswerteeinheit zur Auswertung von erfassten Betriebsparametern aufweist und/oder mit einer Auswerteeinheit verbindbar ist, wobei durch die Umschaltvorrichtung die von dem Spielecontroller dargestellte Spieldarstellung zu einer ausgewertete Betriebsparameter wiedergebenden Auswertedarstellung und/oder umgekehrt umschaltbar ist, wobei die auswertbaren Betriebsparameter vorzugsweise zumindest einen Parameter aus der Gruppe umfassend Pflegedauer, Pflegezeit, Pflegebewegung, Pflegeposition, Pflegewerkzeuggeschwindigkeit, Pflegewerkzeugbeschleunigung und Pflegewerkzeugandruckkraft umfasst.

13. Körperpflegegerät nach dem vorhergehenden Anspruch, wobei die Umschalttaste (25) an der Anzeigevorrichtung (13) vorgesehen ist.

14. Körperpflegegerät nach einem der beiden vorhergehenden Ansprüche, wobei die oder eine weitere Umschalttaste (26) an dem Pflegewerkzeug zum Umschalten des Bildschirminhalts der Anzeigevorrichtung (13) von dem Pflegewerkzeug her vorgesehen ist.

15. Körperpflegegerät nach einem der vorhergehenden Ansprüche, wobei zur Anzeige auf der Anzeigevorrichtung (13) gespeicherte Darstellungen mittels einer an dem Körperpflegegerät vorgesehenen Eingabevorrichtung (23; 26) individuell abänderbar und/oder individuell gestaltbar ausgebildet und in einem Speicherbaustein mit einem Individualcode verknüpft abspeicherbar sind, wobei die Eingabevorrichtung vorzugsweise ein Touchscreen zur Eingabe der individuellen Abänderungen und/oder Gestaltungen umfasst, und/oder wobei die Eingabevorrichtung zur individuellen Abänderung und/oder Gestaltung der gespeicherten Darstellungen eine Programmier-Steuertaste vorzugsweise in Form einer Cursor-Steuertaste zum Anklicken von Display-Schaltflächen und/oder von auf der Anzeigevorrichtung (13) dargestellten Eingabeelementen aufweist.

16. Körperpflegegerät nach einem der vorhergehenden Ansprüche, wobei eine Auswahlvorrichtung zur Auswahl mehrerer speicherbarer Spiele zur Anzeige auf der Anzeigevorrichtung (13) vorgesehen ist, wobei vorzugsweise zumindest eines der auswählbaren Spiele gespeicherte Darstellungen enthält, die von der genannten Eingabevorrichtung individuell abänderbar und/oder gestaltbar ausgebildet sind.

17. Körperpflegegerät nach einem der vorhergehenden Ansprüche, wobei die Anzeigevorrichtung (13) einen von der Basisstation (7) und dem Pflegewerkzeug separat ausgebildeten und separat positionierbaren Baustein bildet und eine Kommunikationsschnittstelle (19) zur Kommunikation mit der Basisstation (7) und/oder mit dem Pflegewerkzeug auch im hiervon separaten Zustand aufweist.

18. Körperpflegegerät nach einem der vorhergehenden Ansprüche, wobei das Pflegewerkzeug eine zusätzliche Anzeigevorrichtung (24) aufweist, die in Abhängigkeit eines Ereignisses, insbesondere eines Spielablaufs an der separat ausgebildeten Anzeigevorrichtung (13), und/oder in Abhängigkeit eines Betriebsparameters des Pflegewerkzeugs gesteuert ist, wobei vorzugsweise die an dem Pflegewerkzeug vorgesehene Anzeigevorrichtung (24) ein beleuchtbares Anzeigeelement, insbesondere beleuchtbaren Anzeigering, an dem Handteil (3), vorzugsweise einem stirnseitigen Ende des Handteils (3) des Pflegewerkzeugs aufweist.

19. Körperpflegegerät nach einem der vorhergehenden Ansprüche, wobei das Pflegewerkzeug Navigationssteuermittel zur Navigation eines virtuellen Bildschirmelements, und/oder Avatars (22) über die Anzeigevorrichtung (13) und/oder über das darauf dargestellte Hintergrundbild aufweist, wobei vorzugsweise die Navigationssteuermittel einen händisch betätigbaren Navigationsschalter (23) umfassen, der vorteilhafterweise mehrere zu verschiedenen Richtungen hin angeordnete Druckabschnitte zur Erzeugung von in verschiedene Richtungen weisenden Navigationssteuersignalen aufweisen, und/oder die Navigationssteuermittel Verschiebemittel zum translatorischen Verschieben des Avatars (22) und Rotationsmittel zum Verdrehen des Avatars (22) aufweisen, wobei vorzugsweise die Verschiebemittel und die Rotationsmittel unabhängig voneinander, ggf. aber gleichzeitig betätigbar ausgebildet sind.

## Claims

1. A personal care device for personal needs, specifically a tooth cleaning device, with a manually guidable care tool, specifically a toothbrush (2), as well as a display device (13) for displaying interactive representations, and a control device (21) that is designed to control the representation interactively from the care tool, wherein a detection device (27) for detecting at least one operating parameter regarding the personal care and/or the care tool is provided and the control device (21) is designed to control the representations depending on the operating parameter, wherein the detection device (27) comprises position detection means (28) for detecting the relative position of the care tool relative to the body part of the device user to be cared for, and the control device (21) is designed to control the representations depending on the detected relative position,
is **characterized in that** the detection device (27) comprises object identification means (30) for identifying a body part and thus for identifying the relative position of the care tool relative to the body part to be cared for and the control device (21) controls the representations of the display device (13) using the detected object identification data and at least one operating parameter regarding the personal care and/or the care tool and the object identification means (30) comprise an optical detection unit for optically detecting at least one anatomical feature of the body part, based on which the body part can be identified, wherein the optical detection unit is provided in the form of a separately placed camera, which captures the care tool on the one hand and the body part to be cared for on the other hand.

2. The personal care device according to the preceding claim, wherein the manually guidable care tool comprises at least one distance sensor, inclination sensor, motion sensor, and/or acceleration sensor for detecting the distance, the inclination, the movement path, movement distance and/or movement direction, and/or the acceleration of the care tool relative to the body part.

3. The personal care device according to claim 1, wherein the optical detection unit is designed to function in a non-contact manner.

4. The personal care device according to any of claims 1 to 3, wherein the object identification means (30) comprise at least one determination unit for determining colors, color contrasts, surface structures, structure differences, material contrasts, surface contours, and/or spatial geometries.

5. The personal care device according to any of the preceding claims, wherein the detection device (27) comprises detection means for detecting a personal care parameter individually for the respectively identified body part, wherein said personal care parameter preferably comprises at least one parameter from the group consisting of care duration, care movement, pressing force, surface cared for, and angle of incidence.

6. The personal care device according to any of the preceding claims, wherein the control device (21) comprises a simulation device for simulating the personal care process by means of a virtual, animated representation on the display device (13), the animation of which can be controlled by an animation control unit depending on the detected relative position and/or the detected object identification data.

7. The personal care device, according to the preceding claim, wherein the animated representation comprises a virtual image part and/or an avatar (22), which is controlled synchronously to the detected relative position and/or synchronously to the at least one operating parameter regarding the personal care.

8. The personal care device according to any of the two preceding claims, wherein the simulation device comprises display means for displaying a body part already cared for and/or a body part yet to be cared for.

9. The personal care device according to any of the preceding claims, wherein the simulation device comprises display means for displaying the desired value and/or the actual value of a personal care parameter in the virtual representation, wherein the displayed desired and/or actual value preferably comprises at least one parameter from the group consisting of the movement path of the care tool, speed of the care tool, contact pressure of the care tool, care duration, surface cared for.

10. The personal care device according to any of the preceding claims, wherein the simulation device comprises display means for displaying an error indicator in the virtual representation in case of an excessive difference between the desired and the actual value of one or more personal care parameters.

11. The personal care device according to any of the preceding claims, wherein the control device (21) comprises a game and/or simulation controller for controlling a video game and/or an animated simulation on the display device (13) as well as an information controller for providing information on the display device (13), wherein a switching device, which can be actuated by means of a switching button (25, 26), is provided for switching from the game representation generated by the game controller to an information representation generated by the information controller on the display device (13) and/or vice versa.

12. The personal care device according to the preceding claim, wherein said information controller comprises an evaluation unit for evaluating detected operating parameters and/or can be connected to an evaluation unit, wherein the game representation displayed by the game controller can be switched to an evaluation representation depicting evaluated operating parameters and/or vice versa by means of the switching device, wherein the evaluated operating parameters preferably comprise at least one parameter from the group consisting of care duration, care time, care movement, care position, care tool speed, care tool acceleration, and care tool pressing force.

13. The personal care device according to the preceding claim, wherein the switching button (25) is provided on the display device (13).

14. The personal care device according to one of the two preceding claims, wherein the switching button or an additional switching button (26), is provided on the care tool for switching the screen content of the display device (13) from the care tool.

15. The personal care device according to any of the preceding claims, wherein representations stored for displaying on the display device (13) can be designed to be individually changed and/or individually designed by means of an input device (23, 26) provided on the personal care device and can be stored, linked to an individual code, in a storage module, wherein the input device preferably comprises a touch screen for entering the individual changes and/or designs, and/or wherein the input device for individually changing and/or designing the stored representations comprises a programming control button, preferably in the form of a cursor control button, for clicking display buttons and/or input elements displayed on the display device (13).

16. The personal care device according to any of the preceding claims, wherein a selection device for selecting several storable games for displaying on the display device (13) is provided, wherein at least one of the selectable games preferably includes stored representations, which can be designed to be individually changed or designed by means of said input device.

17. The personal care device according to any of the preceding claims, wherein the display device (13) constitutes a module that is designed separately and can be positioned separately from the base station (7) and the care tool and that comprises a communication interface (19) for communicating with the base station (7) and/or with the care tool even in the separated condition.

18. The personal care device according to any of the preceding claims, wherein the care tool comprises an additional display device (24), which is controlled depending on an event, specifically a course of a game on the separately designed display device (13), and/or depending on an operating parameter of the care tool, wherein the display device (24) provided on the care tool preferably comprises a display element that can be illuminated, specifically a display ring that can be illuminated, on the hand piece (3), preferably on a frontside end of the hand piece (3) of the care tool.

19. The personal care device according to any of the preceding claims, wherein the care tool comprises navigation control means for navigating a virtual screen element and/or avatar (22) across the display device (13) and/or across the background image displayed on it, wherein the navigation control means preferably comprise a manually operable navigation switch (23), which advantageously comprises several pressure areas arranged toward different directions for generating navigation control signals pointing in different directions, and/or the navigation control means comprise moving the means for translationally moving the avatar (22) and rotation means for turning the avatar (22), wherein the moving means and the rotation means are preferably designed to be independent from one another but possibly operable simultaneously.

## Revendications

1. Appareil de soin du corps à usage personnel, notamment dispositif de brossage des dents, avec un outil de soin pouvant être guidé manuellement, notamment une brosse à dents (2), ainsi qu'un dispositif d'affichage (13) pour l'affichage de représentations interactives et un dispositif de commande (21) qui est équipé pour commander la représentation de manière interactive depuis l'outil de soin, dans lequel un dispositif de détection (27), destiné à détecter au moins un paramètre de fonctionnement concernant le soin corporel et/ou l'outil de soin, est prévu et le dispositif de commande (21) est équipé pour commander les représentations en fonction du paramètre de fonctionnement, dans lequel le dispositif de détection (27) présente un moyen de détection de position (28) destiné à détecter la position relative de l'outil de soin par rapport à la partie du corps à soigner de l'utilisateur de l'appareil et le dispositif de commande (21) est équipé pour commander les représentations en fonction de la position relative détectée,
**caractérisé en ce que** le dispositif de détection (27) présente un moyen de reconnaissance d'objet (30) destiné à reconnaître une partie du corps et ainsi à identifier la position relative de l'outil de soin par rapport à la partie du corps à soigner et le dispositif de commande (21) commande les représentations du dispositif d'affichage (13) à l'aide des données de reconnaissance d'objets détectées et d'au moins un paramètre de fonctionnement concernant l'outil de soin et/ou le soin du corps et le moyen de reconnaissance d'objet (30) présente une unité de détection optique destinée à la détection optique d'au moins une caractéristique anatomique de la partie du corps, à l'aide de laquelle la partie du corps peut être identifiée, dans lequel l'unité de détection optique est prévue sous la forme d'une caméra placée séparément, qui détecte d'une part l'outil de soin et d'autre part la partie du corps à soigner.

2. Appareil de soin du corps selon la revendication précédente, dans lequel l'outil de soin pouvant être guidé manuellement présente au moins un capteur de distance, un capteur d'inclinaison, un capteur de mouvement et/ou un capteur d'accélération pour la détection de la distance, de l'inclinaison, de la trajectoire, de la section et/ou de la direction de déplacement et/ou de l'accélération de l'outil de soin par rapport à la partie du corps.

3. Appareil de soin du corps selon la revendication 1, dans lequel l'unité de détection optique est formée pour fonctionner sans marquage.

4. Appareil de soin du corps selon l'une des revendications 1 à 3, dans lequel le moyen de reconnaissance d'objet (30) présente au moins une unité de détermination destinée à déterminer les couleurs, les contrastes de couleurs, les structures superficielles, les différences de structure, les contrastes de matériaux, les contours de surface et/ou les géométries spatiales.

5. Appareil de soin du corps selon l'une des revendications précédentes, dans lequel le dispositif de détection (27) présente un moyen de détection destiné à détecter un paramètre de soin du corps individuellement pour la partie du corps identifiée respective, dans lequel le paramètre de soin du corps désigné comprend de préférence au moins une grandeur comprise dans le groupe constitué de durée de soin, mouvement de soin, force de pression, surface traitée et angle d'attaque.

6. Appareil de soin du corps selon l'une des revendications précédentes, dans lequel le dispositif de commande (21) présente un dispositif de simulation destiné à simuler le processus de soin du corps au moyen d'une représentation animée virtuelle sur le dispositif d'affichage (13), dont l'animation peut être commandée par une unité de commande d'animation en fonction de la position relative détectée et/ou des données de reconnaissance d'objet détectées.

7. Appareil de soin du corps selon la revendication précédente, dans lequel la représentation animée comprend une partie d'image virtuelle et/ou un avatar (22), qui est commandé(e) de manière synchrone avec la position relative détectée et/ou synchrone avec l'au moins un paramètre de fonctionnement concernant le soin du corps.

8. Appareil de soin du corps selon l'une des deux revendications précédentes, dans lequel le dispositif de simulation présente un moyen d'affichage pour l'affichage d'une partie du corps déjà traitée et/ou d'une partie du corps encore à traiter.

9. Appareil de soin du corps selon l'une des revendications précédentes, dans lequel le dispositif de simulation présente un moyen d'affichage pour l'affichage de la valeur de consigne et/ou de la valeur réelle d'un paramètre de soin du corps dans la représentation virtuelle, dans lequel la valeur de consigne et/ou réelle affichée comprend de préférence au moins une grandeur dans le groupe constitué de la trajectoire de déplacement de l'outil de soin, de la vitesse de l'outil de soin, de la pression de contact de l'outil de soin, de la durée de soin et de la surface traitée.

10. Appareil de soin du corps selon l'une des revendications précédentes, dans lequel le dispositif de simulation présente un moyen d'affichage pour afficher un message d'erreur dans la représentation en cas d'écart de valeur de consigne/réelle excessif d'un ou de plusieurs paramètres de soin du corps.

11. Appareil de soin du corps selon l'une des revendications précédentes, dans lequel le dispositif de commande (21) comprend un contrôleur de jeu et/ou de simulation pour la commande d'un jeu vidéo et/ou d'une simulation animée sur le dispositif d'affichage (13) ainsi qu'un contrôleur d'informations pour la mise à disposition d'informations sur le dispositif d'affichage (13), dans lequel un dispositif de commutation, qui peut être actionné par une touche de commutation (25, 26), est prévu afin de commuter la représentation de jeu générée par le contrôleur de jeu vers une représentation d'informations générée par le contrôleur d'informations sur le dispositif d'affichage (13) et/ou inversement.

12. Appareil de soin du corps selon la revendication précédente, dans lequel le contrôleur d'informations précité présente une unité de traitement pour l'évaluation de paramètres de fonctionnement détectés et/ou peut être relié à une unité de traitement, dans lequel, par le biais du dispositif de commutation, la représentation de jeu représentée par le contrôleur de jeu peut être commutée vers une représentation d'évaluation restituant le paramètre de fonctionnement évalué et/ou inversement, dans lequel le paramètre de fonctionnement pouvant être évalué comprend de préférence au moins un paramètre dans le groupe constitué de la durée de soin, de l'heure du soin, du déplacement de soin, de la position de soin, de la vitesse de l'outil de soin, de l'accélération de l'outil de soin et de la force de pression de l'outil de soin.

13. Appareil de soin du corps selon la revendication précédente, dans lequel la touche de commutation (25) est prévue sur le dispositif d'affichage (13).

14. Appareil de soin du corps selon l'une des deux revendications précédentes, dans lequel la touche de commutation ou une autre touche de commutation (26) est prévue sur l'outil de soin pour commuter le contenu de l'écran du dispositif d'affichage (13) à partir de l'outil de soin.

15. Appareil de soin du corps selon l'une des revendications précédentes, dans lequel, pour l'affichage sur le dispositif d'affichage (13), des représentations enregistrées au moyen d'un dispositif d'entrée (23, 26) prévu sur l'appareil de soin du corps, sont formées pour pouvoir être modifiées et/ou configurées individuellement et pouvoir être enregistrées dans un élément mémoire liées avec un code individuel, dans lequel le dispositif d'entrée comprend de préférence un écran tactile pour l'entrée des modifications et/ou configurations individuelles et/ou dans lequel le dispositif d'entrée présente, pour la modification et/ou la configuration individuelles des représentations enregistrées, une touche de commande de programmation de préférence sous la forme d'une touche de commande de type curseur sur laquelle cliquer sur le bouton de l'écran et/ou sur des boutons d'entrée représentés sur le dispositif d'affichage (13).

16. Appareil de soin du corps selon l'une des revendications précédentes, dans lequel un dispositif de sélection est prévu pour la sélection de plusieurs jeux pouvant être enregistrés pour affichage sur le dispositif d'affichage (13), dans lequel de préférence au moins un des jeux pouvant être sélectionné contient des représentations enregistrées, qui sont formées par le dispositif d'entrée précité individuellement de manière modifiable et/ou configurable.

17. Appareil de soin du corps selon l'une des revendications précédentes, dans lequel le dispositif d'affichage (13) présente un élément pouvant être positionné séparément et formé séparément de la station de base (7) et de l'outil de soin et présente une interface de communication (19) pour communiquer avec la station de base (7) et/ou avec l'outil de soin également dans un état séparé de ceux-ci.

18. Appareil de soin du corps selon l'une des revendications précédentes, dans lequel l'outil de soin présente un dispositif d'affichage (24) supplémentaire, qui est commandé en fonction d'un événement, notamment un déroulé du jeu sur le dispositif d'affichage (13) formé séparément et/ou en fonction d'un paramètre de fonctionnement de l'outil de soin, dans lequel, de préférence, le dispositif d'affichage (24) prévu sur l'outil de soin présente un élément d'affichage pouvant être éclairé, notamment un anneau d'affichage pouvant être éclairé, sur la pièce à main (3), de préférence une extrémité côté frontal de la pièce à main (3) de l'outil de soin.

19. Appareil de soin du corps selon l'une des revendications précédentes, dans lequel l'outil de soin présente un moyen de commande de navigation pour la navigation d'un élément d'écran virtuel et/ou de l'avatar (22) sur le dispositif d'affichage (13) et/ou sur l'image d'arrière-plan représentée sur celui-ci, dans lequel, de préférence, le moyen de commande de navigation comprend un commutateur de navigation (23) pouvant être actionné à la main, qui présente préférablement plusieurs sections de pression agencées dans différentes directions, pour la création de signaux de commande de navigation dans différentes directions et/ou le moyen de commande de navigation présente un moyen de décalage pour un décalage par translation de l'avatar (22) et un moyen de rotation pour entraîner en rotation l'avatar (22), dans lequel, de préférence, le moyen de décalage et le moyen de rotation sont formés indépendamment l'un de l'autre, le cas échéant, mais pouvant être actionnés en même temps.
